# EUROPÄISCHE PATENTSCHRIFT

(11) **EP 0 229 668 B1**
(45) Veröffentlichungstag und Bekanntmachung des Hinweises auf die Patenterteilung: **20.10.1993**
(21) Anmeldenummer: 87100447.9
(22) Anmeldetag: 15.01.1987
(51) Int. Cl.: B27C 1/00, B27B 5/06

(54) **Schneidmaschine für plattenförmige Werkstücke**
Cutting machine for work pieces in the shape of a plate
Machine de coupe pour des pièces en forme de plaque

(30) Priorität: 17.01.1986 DE 3601190
(43) Veröffentlichungstag der Anmeldung: 22.07.1987
(73) Patentinhaber: Schreiber, Hans, D-71573 Allmersbach (DE)
(72) Erfinder: Schreiber, Hans, D-71573 Allmersbach (DE)
(74) Vertreter: Kastner, Hermann, Dipl.-Ing. Patentanwalt

(56) Entgegenhaltungen:
- EP-A- 0 100 065
- DE-A- 1 953 578
- DE-A- 3 207 873
- DE-C- 3 419 212
- DE-U- 8 601 006
- FR-A- 2 302 168
- GB-A- 2 058 658
- US-A- 2 891 451
- US-A- 2 990 861
- US-A- 4 346 691

## Beschreibung

Für das Bearbeiten plattenförmiger Werkstücke insbesondere aus Holz oder Holzwerkstoffen werden im allgemeinen Schneidmaschinen eingesetzt, die ein rahmenartiges Grundgestell haben, das zumindest annähernd aufrecht steht und gegenüber der Lotrechten in Aufwärtsrichtung leicht nach hinten geneigt ist. Am Grundgestell sind im Anlagebereich der Werkstücke eine Anzahl Anlageelemente fest angeordnet, deren eigentliche Anlagefläche meist durch eine Holzleiste gebildet wird. Entlang dem unteren Rand des Anlagebereiches für die Werkstücke ist eine waagerecht ausgerichtete Auflageleiste angeordnet, die gegenüber der Anlageebene der Anlageelemente nach vorn um ein gewisses Maß übersteht und eine Auflagefläche aufweist, die rechtwinkelig zur Anlageebene der Anlageelemente ausgerichtet ist. Am Grundgestell sind oben und unten je eine waagerechte Führung für einen Laufwagen oder Laufschlitten angebracht. Der daran geführte Laufwagen oder Laufschlitten weist seinerseits eine parallel zur Anlageebene der Anlageelemente ausgerichtete Führung auf, die trotz ihrer leichten Neigung gegenüber der Lotrechten im folgenden der Einfachheit halber als lotrechte Führung bezeichnet wird. An dieser Führung ist ein Arbeitswagen oder Arbeitsschlitten in der Höhe verfahrbar geführt, der eine Kreissäge als Schneidwerkzeug trägt. Die Kreissäge ist mit dem Laufwagen oder Laufschlitten entweder in der Weise starr verbunden, daß ihre Rotationsachse waagerecht ausgerichtet ist und ihr Sägeblatt dementsprechend lotrecht steht. Manchmal ist die Kreissäge auch mittels eines Schwenklagers derart schwenkbar gelagert, daß ihre Rotationsachse auch in eine lotrechte Ebene geschwenkt werden kann, in der sie parallel zur Anlageebene der Anlageelemente, also leicht schräg gegenüber der Lotrechten, ausgerichtet ist und ihr Sägeblatt in einer quasi waagerechten Ebene ausgerichtet ist. Die Kreissäge ist am Arbeitswagen oder Arbeitsschlitten zumindest so eingestellt oder einstellbar, daß das Sägeblatt um ein geringes Maß in die Anlageebene der Anlageelemente eintaucht, damit die Werkstücke entlang der Schnittlinie vollständig durchtrennt werden können. Aus diesem Grunde sind die Anlageelemente zumindest in einer lotrecht ausgerichteten Hauptschneidezone auf einer gewissen Breite ausgespart. Am Grundgestell ist ein waagerecht wirkender Anschlag (Horizontalanschlag) für die Werkstücke in waagerechter Richtung verstellbar angebracht. Er wird nach Möglichkeit so eingestellt, daß das Sägeblatt der Kreissäge sich in der Hauptschneidezone befindet. Falls einmal eine Schnittlinie außerhalb der Hauptschneidezone liegen sollte, lassen es die als Anlageelemente dienenden Holzleisten zu, daß das Sägeblatt einen vollständigen Trennschnitt ausführt, indem es entlang der Schnittlinie soweit in die Holzleisten einschneidet, wie es seinem Unterschnitt gegenüber der Anlageebene der Anlageelemente entspricht.

Ein plattenförmiges Werkstück wird aus einer Rohplatte mit etwas größeren Abmessungen z.B. aus einer Spanplatte, einer Tischlerplatte oder einer Furnierplatte, dadurch auf Maß geschnitten, daß die Rohplatte zunächst entlang einer Kante besäumt wird. Danach wird die Rohplatte mehrfach umgespannt und mittels der Kreissäge auf die endgültigen Maße zurechtgeschnitten. Das Umspannen erfordert jedesmal das Abnehmen der Rohplatte und das Verstellen zumindest des Horizontalanschlages auf die neue Schnittlinie. Bei schwenkbar angeordneter Kreissäge kann ein Teil der Umspannvorgänge der Rohplatte dadurch eingespart werden, daß die Kreissäge geschwenkt wird und nach dem Einstellen auf einen bestimmten Abstand gegenüber der Auflageleiste mit dem Laufwagen oder Laufschlitten waagerecht bewegt wird. Das mehrfache Umspannen der Rohplatte ist sehr umständlich und bei großen Rohplatten und entsprechend großem Werkstück für die Bedienungsperson sehr beschwerlich und häufig überhaupt nur von zwei Bedienungspersonen zu bewältigen. Selbst bei einer schwenkbaren Kreissäge ist das Zurechtschneiden eines Werkstückes sehr umständiglich, da dabei die Kreissäge zweimal verschwenkt und jedes Mal neu eingestellt werden muß. Diese Schneidmaschinen mit einer Kreissäge haben noch den weiteren Nachteil, daß die Zähne der Kreissäge aus dem Werkstück auf einer Bewegungsbahn austreten, die eine Richtungskomponente hat, die lotrecht auf der Werkstückoberseite steht, so daß beim Schneiden von kunststoffbeschichteten oder furnierten Rohplatten die Kunststoffbeschichtung oder das Furnier an den Schneidrändern mehr oder minder stark ausbricht. Dadurch erhält der Rand ein unschönes Aussehen, so daß er bei höheren Anforderungen an das Aussehen nachgearbeitet werden muß, wozu im allgemeinen zuvor eine Bearbeitungszugabe berücksichtigt werden muß.

Der im Anspruch 1 angegebenen Erfindung liegt die Aufgabe zugrunde, eine Schneidmaschine für das Bearbeiten plattenförmiger Werkstücke insbesondere aus Holzwerkstoffen zu schaffen, bei der das Zurechtschneiden eines Werkstückes auf seine endgültigen Abmessungen ohne Umspannen möglich ist.

Dadurch, daß die Anlageelemente als Saugnäpfe ausgebildet sind, wird das Werkstück nach dem Einschalten der unter dem Werkstück stehenden Saugnäpfe am Grundgestell unverrückbar festgehalten. Dadurch wiederum kann das Richtscheit aus der Richtstellung, in der das Werkstück an ihm ausgerichtet wurde, vom Werkstück weg in die Ruhestellung bewegt werden, so daß das Werkstück ringsum frei liegt und entlang sämtlicher Kanten bearbeitet werden kann, ohne daß es dafür auch nur einmal umgespannt werden muß. Dadurch, daß als Schneidwerkzeug ein Fräser verwendet wird, dessen Rotationsachse normal zur Fläche des Werkstückes ausgerichtet ist, kann das Schneidwerkzeug in einem Zug an allen vier Kanten entlang bewegt werden und dabei das Werkstück ringsum bearbeitet werden, d.h. auf seine endgültigen Abmessungen zurechtgeschnitten werden. Am Ende der gerade bearbeiteten Kante wird der Fräser weiterbewegt, bis seine Rotationsachse um einen Fräserhalbmesser über die rechtwinklig anschließende neue Schnittlinie hinaus übersteht, wodurch die um 90° gegenüber der bisherigen Bearbeitungsebene gedrehte Tangentialebene des Fräsers genau mit der neuen Schnittlinie fluchtet. Wenn die Anschläge jeweils auf dieses Maß eingestellt sind, kann der Schneidvorgang an allen vier Kanten zügig aufeinander folgen. Die zylindrische Umfangfläche des Fräsers hat in dem Viertelkreisbogen zwischen den zwei rechtwinklig einander abstoßenden Tangentialebenen von den sich kreuzenden Schnittlinien des Werkstückes einen beträchtlichen Abstand, so daß selbst bei größeren Bearbeitungszugaben an den beiden aneinander anstoßenden Werkstückkanten der Fräser an der Ecke freiläuft, ehe er auf der neuen Bewegungsbahn in Bewegung gesetzt wird. Dadurch ist in jedem Falle ein einwandfreier Werkzeugauslauf und Werkzeugeinlauf gegeben, so daß am Werkstück scharfe Ecken entstehen.

Da der Fräser mit hoher Umlaufgeschwindigkeit und geringer Spantiefe arbeitet und außerdem die Schnittkräfte parallel zur Plattenebene am Werkstück angreifen, wird auch an der Beschichtung einer beschichteten Platte oder am Furnier einer furnierten Platte ein sauberer und glatter Schnitt erzeugt, der frei von Ausbrüchen entlang der Kante ist.

Nach dem Abnehmen eines fertig bearbeiteten Werkstückes wird das Richtscheit wieder in seine Richtstellung gebracht und mittels der Haltevorrichtung verriegelt. Dadurch werden die Werkstücke jeweils auf eine ganz bestimmte waagerechte Grundlinie des Schneidwerkzeuges eingestellt, entlang der im allgemeinen der erste Schnitt erfolgt. Dabei ist selbstverständlich eine Bearbeitungszugabe entlang dieser waagerechten Kante am Werkstück berücksichtigt.

Bei einer Ausgestaltung der Schneidmaschine nach Anspruch 2 kann die im Einzelfall für eine ausreichende Haftkraft erforderliche Anzahl Saugnäpfe ohne weiteres innerhalb der Umrißlinie des fertig bearbeiteten Werkstückes untergebracht werden, ohne daß das Werkstück nach den Saugnäpfen ausgerichtet werden muß. Dadurch können die Werkstücke stets nach der waagerechten Grundlinie des Schneidwerkzeuges und zweckmäßigerweise auch nach einer bestimmten stets gleichbleibenden lotrechten Grundlinie des Schneidwerkzeuges ausgerichtet werden. Dadurch wird der Richt- und Meßaufwand erheblich verringert. Außerdem können die Saugnäpfe dadurch so nahe wie möglich entlang der Schnittlinien angeordnet werden und dadurch wiederum der Überstand der freien Werkstückränder auf ein Minimum verringert werden. Das kommt der Haftsicherheit der Werkstücke zugute und verringert die Gefahr von Schwingungen im Werkstück quer zu seiner Plattenebene. Auch das kommt einem glatten sauberen Schnitt zugute.

Bei einer Ausgestaltung der Schneidmaschine nach Anspruch 3 kann die Grundeinstellung des Richtscheites in gewissen Grenzen verstellt werden. Dadurch wiederum kann die Bearbeitungszugabe am unteren waagrechten Rand des Werkstückes entsprechend verändert werden. Sie kann beispielsweise so eingestellt werden, daß einerseits die gesamte Rohkante unterhalb der waagerechten Grundlinie des Schneidwerkzeuges liegt und andererseits der Verschnitt auf ein Minimum eingestellt werden. Darüber hinaus kann durch diese Verstellbarkeit des Richtscheites die Bearbeitungszugabe am unteren und oberen waagerechten Rand vermittelt werden, so daß dort die Zerspannungskräfte annähernd gleich groß sind und nicht beim einen Schnitt sehr viel größer werden als beim anderen Schnitt. Bei einer Ausgestaltung der Schneidmaschine nach Anspruch 4 wird das Einstellen des Richtscheites erleichtert, sei es für das Ausrichten einer Rohplatte, insbesondere beim Vermitteln der Bearbeitungszugaben am oberen und unteren Rand, oder sei es beim Ausrichten eines bereits bearbeiteten Werkstückes, das um ein ganz bestimmtes Maß nachgearbeitet werden muß.

Durch eine Ausgestaltung der Schneidmaschine nach Anspruch 5 wird eine verhältnismäßig einfach und billig herzustellende Führung für das Richtscheit geschaffen, die zugleich den Vorteil einer einwandfreien Parallelführung des Richtscheites insbesondere bei einer Einstellbewegung hat. Bei einer Ausgestaltung der Schneidmaschine nach Anspruch 6 wird das Anheben des Richtscheits in seine Richtstellung erleichtert. Das gilt vor allem für Schneidmaschinen mit größerer Länge, bei denen das Richtscheit sowohl durch seine Länge wie auch durch die Maßnahmen für eine ausreichend große Steifigkeit des Richtscheites ein entsprechend hohes Gewicht hat.

Bei einer Ausgestaltung der Schneidmaschine nach Anspruch 7 wird erreicht, daß beim Anheben des Richtscheites in seine Richtstellung der bewegbare Teil der Haltevorrichtung selbsttätig ausweicht, so daß das Richtscheit ohne Aufenthalt in seine Richtstellung gebracht werden kann, ohne daß es oder die Haltevorrichtung zuvor anstößt oder, um das zu vermeiden, eine gesonderte Betätigungsbewegung erforderlich ist. Wenn außerdem ein Federglied für den bewegbaren Teil der Haltevorrichtung vorhanden ist, wird das Richtscheit in der Richtstellung selbsttätig verriegelt. Durch eine Ausgestaltung der Schneidmaschine nach Anspruch 8 wird eine einfach aufebaute und verhältnismäßig einfach und billig herzustellende Haltevorrichtung geschaffen, die außerdem sehr robust und sehr zuverläßig ist. Durch eine Ausgestaltung der Schneidmaschine nach Anspruch 9 wird erreicht, daß die Haltevorrichtung auch dann ausgelöst wird und das Richtscheit aus seiner in der Bewegungsbahn des Schneidwerkzeuges liegenden Richtstellung heraus in die Ruhestellung außerhalb der Bewegungsbahn des Schneidwerkzeuges bewegt wird, wenn das vorherige Ansenken des Richtscheites von der Bedienungsperson etwa aus Unachtsamkeit nicht vorgenommen wurde.

Bei einer Ausgestaltung der Schneidmaschine nach Anspruch 10 führt der Träger der Haltevorrichtung genau die gleiche Bewegung wie das Richtscheit aus, so daß bei einer Verstellung der Haltevorrichtung für eine Änderung der Höhenstellung des Richtscheites die Verriegelung innerhalb der Haltevorrichtung nicht beeinträchtigt wird. Mit einer Ausgestaltung der Schneidmaschine nach Anspruch 11 wird eine feinfühlige Verstellung der Haltevorrichtung und damit des Richtscheites mit einer großen Weguntersetzung und einer entsprechend großen Kraftübersetzung möglich, die auch bei voll belastetem Richtscheit eine leichte Verstellung ermöglicht. Außerdem hat diese Ausbildung der Verstellvorrichtung den Vorteil, daß infolge der Selbsthemmung der Verstellspindel die Gewichtskraft des Richtscheites und eine Belastung des Richtscheites durch ein Werkstück keine Rückwirkungen auf die Verstelleinrichtung hat.

Bei einer Ausgestaltung der Schneidmaschine nach Anspruch 12 kann durch ein Betätigungssignal für den pneumatischen Kolbenantrieb, d.h. ohne unmittelbare Handbetätigung, die Haltevorrichtung ausgelöst und das Richtscheit abgesenkt werden. Eine etwa zusätzlich vorhandene Sicherungsvorrichtung in Form eines Steuergliedes mit Steuernocken dient dann lediglich als letzte Absicherung für den Fall, daß die pneumatische Steuerung ausfällt und dies nicht rechtzeitig bemerkt wird.

Bei einer Ausgestaltung der Schneidmaschine nach Anspruch 13 ist es möglich, auch solche Rohplatten auf der Schneidmaschine zu schneiden, die auf einer Seite oder auf beiden Seiten mit einer Kunststoffplatte oder mit einem Furnier beschichtet sind, die üblicherweise mit einem gewissen Übermaß auf die Kernplatte aufgebracht werden und erst zusammen mit dieser auf Maß geschnitten werden. Die Stützzungen, die einen gewissen Abstand von der Aufspannebene der Werkstücke haben, erstrecken sich an solchen auf den Oberseiten der Kernplatte aufgebrachten Beschichtungen vorbei bis zum Rand der Kernplatte hin und nehmen diese auf. Aus der Gesamtzahl der Stützzungen werden dafür diejenigen zwei Stützzungen eingesetzt, die in Bezug auf die Abmessungen des Werkstückes am günstigsten gelegen sind, weil damit bereits eine statisch bestimmte Aufnahme des Werkstückes gegeben ist. Die Aufnahme eines Werkstückes mittels der Stützzungen ist aber auch dann angezeigt, wenn das Werkstück keine überstehenden Deckschichten aufweist, dafür aber seine untere waagerechte Rohkante sehr unregelmäßig ist und womöglich an einer Stelle einen extremen Vorsprung aufweist, der mehr als die übliche Bearbeitungszugabe außerhalb des mittleren Toleranzbereiches der übrigen Unregelmäßigkeiten liegt. In diesem Falle kann die Aufnahme des Werkstückes auf zwei Stützzungen an zwei Stellen außerhalb des extremen Vorsprunges das Werkstück wieder in eine mittlere Ausrichtung bringen. Bei einer Weiterbildung der Schneidmaschine nach Anspruch 14 wird eine sehr einfache Fürhung und Lagerung der Stützzungen erreicht die, wenn sie vollends aufgestellt sind, eine stabile Arbeitsstellung einnehmen und die andererseits durch eine einfache Fingerbewegung in ihre Ruhestellung umgekippt werden können. Bei einer Ausbildung der Schneidmaschine nach Anspruch 15 können die für ein Werkstück aufgestellten Zungen mittels der Betätigungsstange gemeinsam in die Ruhestellung umgeklappt werden, ohne daß die Bedienungsperson zu jeder der aufgestellten Stützzungen hingehen muß und sie einzeln umklappen muß.

Bei der Verwendung von Stützzungen muß das Richtscheit auf eine tiefere Grundeinstellung eingestellt werden und gegebenenfalls von dieser aus eine Feineinstellung vorgenommen werden. Das wird durch eine Ausgestaltung der Schneidmaschine nach Anspruch 16 erleichtert, wo für jede der beiden Grundstellungen des Richtscheites eine Einstellskala und ein zugehöriges Ableselineal in der einen oder anderen Weise vorhanden sind. Bei einer Weiterbildung der Schneidmaschine nach Anspruch 17 wird die Ablesesicherheit dadurch nochmals erhöht, daß die gerade nicht geltende Einstellskala oder das gerade nicht geltende Ableselineal abgedeckt werden. Bei einer Ausgestaltung der Schneidmaschine nach Anspruch 18 wird auch für die zweite Grundeinstellung für den Einsatz der Stützzungen ein bestimmter Grundwert vorgegeben, der allenfalls bei einem Austausch der Teile der Schneidmaschine oder nach einer Reparatur neu eingestellt werden muß. Die Endanschläge sorgen dafür, daß die Grundeinstellung des Richtscheits auf die waagerechte Grundlinie des Schneidwerkzeuges auch ohne Beachtung der Einstellskala allein durch Anfahren des Endanschlages erreicht wird und lediglich in der anderen Einstellrichtung, d.h. bei einer Vergrößerung des Abstandes zwischen der Oberseite des Richtscheites oder der Oberkante der Stützzungen und der waagerechten Grundlinie des Schneidwerkzeuges, eine Verstellbewegung aufgrund einer Messung oder, soweit vorhanden, aufgrund der Einstellskala vorgenommen wird.

Bei einer Ausgestaltung der Schneidmaschine nach Anspruch 19 wird das Einrichten der Werkstücke in waagerechter Richtung erleichert, in dem nach dem Aufstellen des Werkstückes auf dem Richtscheit und vor dem Einschalten der Saugnäpfe der Meßwagen oder Meßschlitten in seine Meßstellung gebracht wird und mittels der daran angeordneten Meßzungen die Stellung des Werkstückes gemessen und dieses erforderlichenfalls ausgerichtet wird. Dadurch ist es möglich, die Bearbeitungszugabe an beiden lotrechten Rohkanten sehr klein zu halten, weil sie mittels der Meßzungen ausgemittelt werden können. Durch die Verwendung mehrerer Meßzungen, die noch dazu in der Höhe verstellbar sind, kann ein Werkstück mit sehr unregelmäßiger Rohkante abgetastet werden, um sicherzustellen, daß auch die stärkste Einbuchtung der dem Meßwagen zugekehrten lotrechten Umrißlinie des Werkstückes außerhalb der lotrechten Grundlinie des Schneidwerkzeuges liegt und somit Fehlstellen am Werkstück nicht auftreten können. Bei einer Weiterbildung nach Anspruch 20 wird das Arbeiten mit dem Meßwagen oder Meßschlitten dadurch erleichtert, daß er in der Meßstellung verriegelt werden kann und somit die richtige Einstellung des Meßschlittens beim Arbeiten mit den Meßzungen gar nicht mehr beachtet werden muß. Dadurch, daß die Meßzungen mit Andrückfedern versehen sind, müssen sie nicht einzeln gegen das Werkstück hin verschoben werden, sondern sie zeigen sofort nach ihrem Auftreffen auf dem Werkstück oder umgekehrt nach dem Auftreffen des Werkstückes auf den Meßzungen an, ob das Werkstück richtig steht oder ob es ausgerichtet werden muß. Bei einer Ausgestaltung der Schneidmaschine nach Anspruch 21 wird die Bedienungsperson von der visuellen Ablesung der Anzeigewerte sämtlicher Meßzungen entlastet, indem die Steuersignale der Signalgeber beispielsweise in einer Auswerteschaltung verarbeitet werden und daraus ein Einzelsignal, beispielsweise ein Summen-oder ein Differenzsignal oder ein Mittelwertsignal, gebildet wird, das allein von der Bedienungsperson beachtet und auf die Einstellung der Schneidmaschine übertragen werden muß, oder das unmittelbar auf eine entsprechende Steuerung der Schneidmaschine einwirkt, beispielsweise den Antriebsmotor des Schneidwerkzeuges ausschaltet oder ein Einschalten desselben verhindert, wenn das Werkstück nicht richtig eingestellt ist oder wenn wegen Unter- oder Überschreiten eines bestimmten Wertes seine Bearbeitung nicht ratsam oder nicht möglich ist.

Mit einer Ausgestaltung der Schneidmaschine nach Anspruch 22 können sehr kleine Bearbeitungszugaben an beiden lotrechten Kanten des Werkstückes verwirklicht werden, weil das Werkstück an einem festen Anschlag angelegt werden kann und daher seine Einstellung vom richtigen Ablesen verschiebbarer Meßzungen und vom richtigen Übertragen der Ablesewerte auf die Einstellung des Werkstückes oder der Horizontalanschläge unabhängig ist. Mit dem einstellbaren Anschlagkopf kann eine bestimmte Bearbeitungszugabe sehr genau auf beide lotrechte Kanten verteilt werden, indem das Werkstück zunächst am starren Anschlag angelegt wird, der mit der lotrechten Grundlinie des Schneidewerkzeuges fluchtet, danach das Übermaß des Werkstückes gemessen wird und der einstellbare Anschlagkopf auf die halbe Bearbeitungszugabe gegenüber dem starren Einstellkopf eingestellt wird und das Werkstück daran angelegt wird, ehe die Saugnäpfe eingeschaltet werden. Eine solche Einstellung ist z.B. dann wünschenswert, wenn ein Werkstück zunächst mit einem gewissen Untermaß zugeschnitten wurde, dann an den Kanten mit je einer Furnier-oder Kantenleiste versehen wurde und anschließend diese Kantenleisten nochmals auf ein genaues Endmaß zugeschnitten werden müssen. Wenn die Kantenleisten für sich allein oder zusammen mit der Kernplatte bereits auf Gehrung geschnitten sind, ist es sogar unbedingt erforderlich, daß die Bearbeitungszugabe ausgemittelt wird. Bei einer Weiterbildung der Schneidmaschine nach Anspruch 23 wird die Handhabung der beiden Anschlagköpfe erleichtert.

Eine Ausgestaltung der Schneidmaschine nach Anspruch 24 erleichtert das Arbeiten an der Schneidmaschine, weil dabei das Werkzeug durch einen Kraftantrieb am Werkstück entlang geführt wird, der nicht nur die Verschiebekräfte sondern auch die Schnittkräfte übernimmt. Außerdem wird dadurch das Schneidergebnis gleichmäßiger als bei Handantrieb. Die Verwendung pneumatischer Kolbenantriebe hat unter anderem auch noch den Vorteil, daß auch nach dem Abschalten der Druckluftzufuhr infolge des im Zylinder noch vorhandenen Restdruckes des Arbeitsmittels der Laufwagen und/und der Arbeitswagen ohne weitere Maßnahmen an dem Anschlag angedrückt stehen bleiben, so daß eine zur vorgehenden Schneidbewegung im rechten Winkel anschließende Schneidbewegung zuverläßig genau entlang der vorgesehenen Schnittlinie ausgeführt wird. Eine Verbindung der Anschläge mit je einem Signalgeber ermöglicht es, die von diesem ausgehenden Steuersignal in einer Steuerschaltung dazu zu verwenden, daß die nächstfolgende Fahrbewegung des Laufwagens oder des Arbeitswagens ohne große Zeitverzögerung und vor allem ohne das Betätigen von Schaltern durch die Bedienungsperson an die vorhergehende anschließt. Dadurch werden Wartezeiten und auch Fehlbedienungen vermieden.

Durch eine Ausgestaltung der Schneidmaschine nach Anspruch 25 ist es möglich, für die Rundumbearbeitung eines plattenförmigen Werkstückes den Laufwagen und den Arbeitswagen jeweils an den einen und dann an den anderen Anschlag heranzuführen und den betreffenden Schnitt auszuführen und nach Beendigung des letzten Schnittes durch Lösen der Verriegelungsvorrichtung des einen Horizontalanschlages diesen zusammen mit dem Laufwagen von der lotrechten Grundlinie des Schneidwerkzeuges weg in eine davon entfernte Ruhestellung zu verfahren. Durch die Verriegelungsvorrichtung wird sichergestellt, daß während der Bearbeitung der auf dieser Seite gelegenen Kante des Werkstückes der Laufwagen in der richtigen Betriebsstellung feststeht und das Schneidwerkzeug genau entlang der lotrechten Grundlinie schneidet. Bei einer Weiterbildung der Schneidmaschine nach Anspruch 26 wird erreicht, daß beim Verfahren des Laufwagens in seine Betriebsstellung der verschiebbare Horizontalanschlag selbsttätig in seine Betriebsstellung zurückkehrt und dort selbsttätig verriegelt wird, wodurch die genaue Einhaltung der lotrechten Grundlinie durch das Schneidwerkzeug unabhängig von der Aufmerksamkeit der Bedienungsperson hinsichtlich der Einstellung des Horizontalanschlages gewährleistet ist. Wenn die Schneidmaschine nach Anspruch 27 weitergebildet ist, kann die Verriegelungsvorrichtung für den verfahrbaren Horizontalanschlag von einer Steuerung dann betätigt werden, wenn das Schneidwerkzeug einen Umlauf um das Werkstück vollständig beendet hat und an dem unteren Vertikalanschlag angelangt ist und den dort vorhandenen Signalgeber betätigt hat.

Bei einer Ausgestaltung der Schneidmaschine nach Anspruch 28 kann das Grundgestell mit einem daran festgehaltenen Werkstück gegenüber der normalen Betriebsstellung stärker geneigt werden, bis hin zur waagerechten Stellung. Dadurch werden die Saugnäpfe von der Gewichtskraft des Werkstückes zu einem entsprechenden Teil oder vollständig entlastet, so daß sie hauptsächlich noch die Schnittkräfte des Schneidwerkzeuges aufnehmen müssen. Dadurch laßen sich auch solche Werkstücke aufspannen und bearbeiten, die eine sehr rauhe oder eine sehr unregelmäßige Oberfläche haben, bei denen die Haltekraft der Saugnäpfe von vornherein vermindert ist oder, insbesondere bei einer längeren Bearbeitungszeit, während einer Aufspannung allmählich abnimmt.

Im folgenden wird die Erfindung anhand eines in den Zeichnungen dargestellten Ausführungsbeispiele der Schneidmaschine näher erläutert. Es zeigen:
- Fig. 1: eine Vorderansicht der Schneidmaschine;
- Fig. 2: eine Seitenansicht der Schneidmaschine;
- Fig. 3: eine ausschnittweise und teilweise geschnitten dargestellte Seitenansicht eines Arbeitswagens der Schneidmaschine an einer lotrechten Führung;
- Fig. 4: eine ausschnittweise und teilweise geschnitten dargestellte Draufsicht des Arbeitswagens nach Fig. 3;

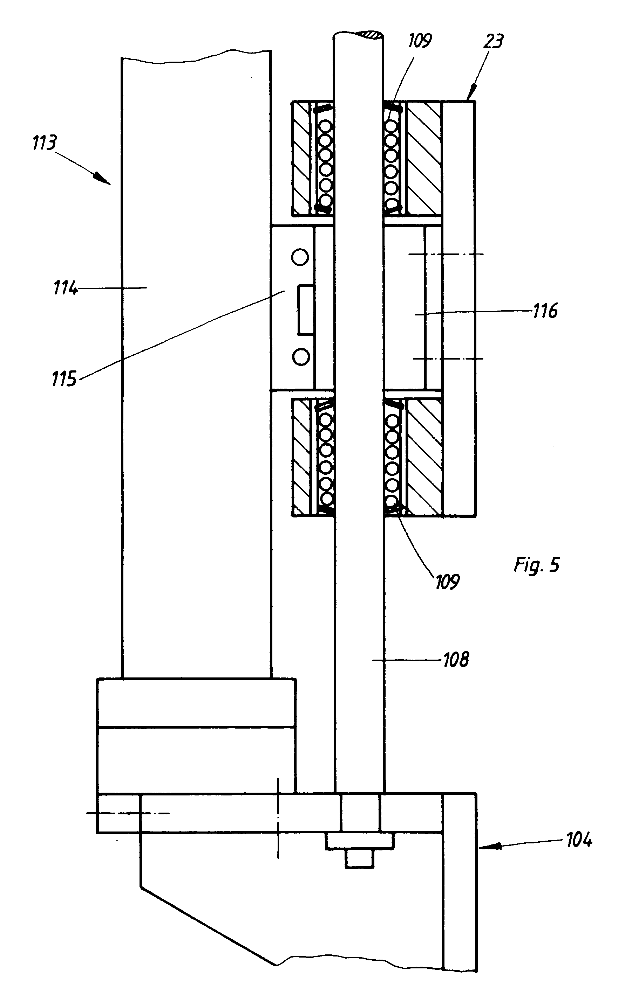

- Fig. 5: eine Draufsicht eines Teiles eines Laufwagens an einer waagerechten Führung;
- Fig. 6: eine ausschnittweise dargestellte Vorderansicht der Schneidmaschine mit einer Haltevorrichtung und Verstellvorrichtung für ein Richtscheit;
- Fig. 7: eine Draufsicht der Haltevorrichtung und Verstellvorrichtung nach Fig. 6;
- Fig. 8: eine ausschnittweise dargestellte Vorderansicht der Schneidmaschine mit einem Meßwagen;
- Fig. 9: eine ausschnittweise dargestellte Draufsicht des Richtscheites;
- Fig. 10: eine Vorderansicht des Richtscheites nach Fig. 9;
- Fig. 11: einen Querschnitt des Richtscheites nach Fig. 9;
- Fig. 12 bis 14: eine Fig. 9 bis 11 entsprechende Darstellung eines abgewandelten Richtscheites für die Schneidmaschine;
- Fig. 15: eine teilweise geschnitten dargestellte Seitenansicht eines Anschlages für den Laufwagen oder den Arbeitswagen;
- Fig. 16: eine Vorderansicht des Anschlages nach Fig. 15;
- Fig. 17: eine Vorderansicht eines anderen Anschlages für den Laufwagen;
- Fig. 18: eine Seitentansicht des Anschlages nach Fig. 17.

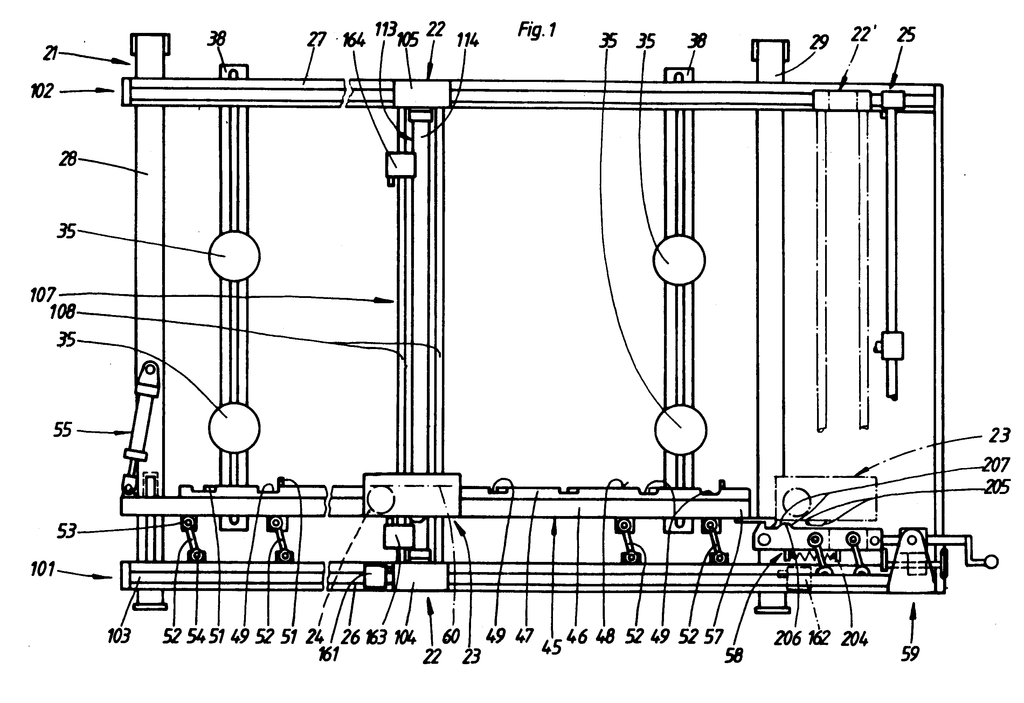

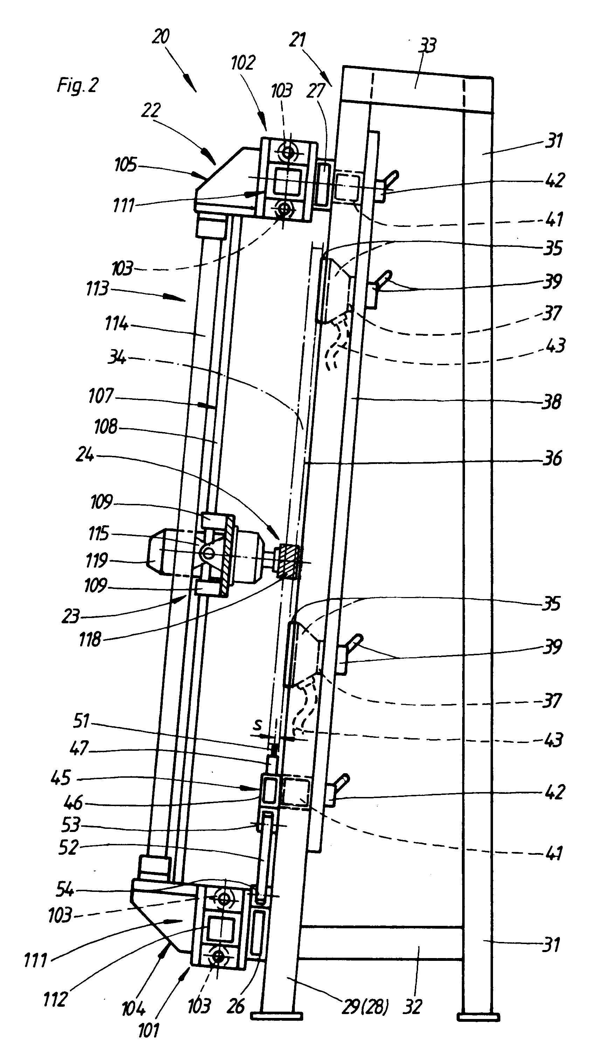

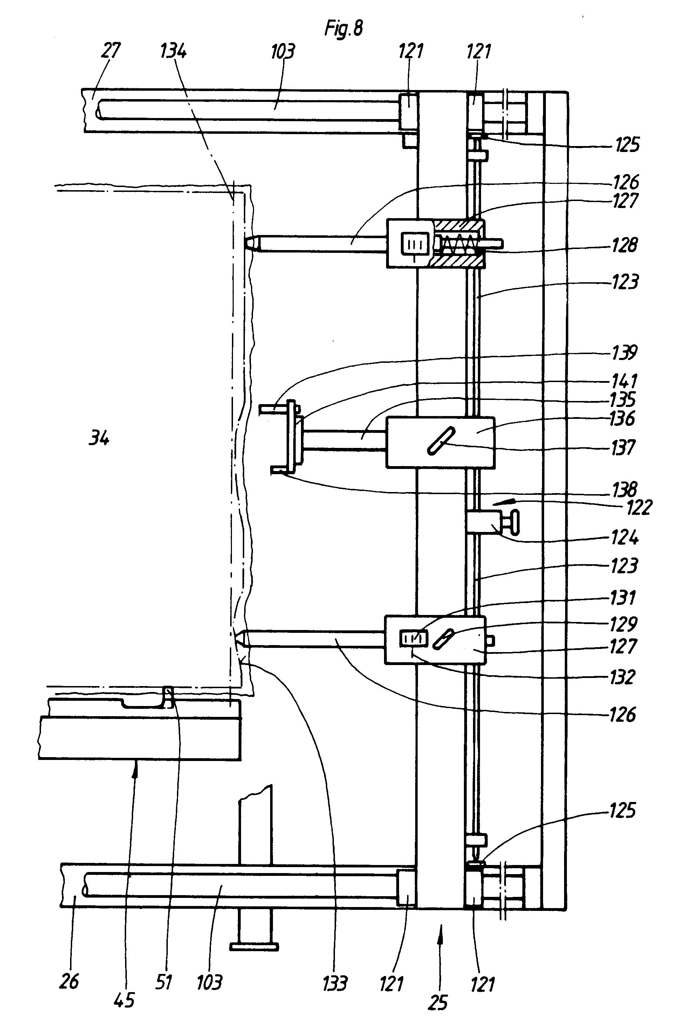

Die Schneidmaschine 20 weist als Hauptbaugruppen ein Grundgestell 21, einen daran waagerecht verfahrbaren Laufwagen 22, einen an diesem lotrecht verfahrbaren Arbeitswagen 23 mit einem Schneidwerkzeug 24 (Fig. 2) und einen Meßwagen 25 auf. Der Meßwagen 25 ist in Fig. 1 nur angedeutet und in Fig. 8 ausführlicher dargestellt.

Das Grundgestell 21 ist rahmenartig ausgebildet und näherungsweise lotrecht angeordnet, wobei es in der Aufwärtsrichtung gegenüber der Lotrechten leicht nach hinten geneigt ist. Ungeachtet dieser Neigung werden im folgenden alle Teile und ihre Ausrichtung als lotrecht bezeichnet, die in einer lotrechten Seitenrißebene parallel zum Grundgestell 21 verlaufen. Das Grundgestell weist zwei Längsträger, den unteren Längsträger 26 und den oberen Längsträger 27, sowie zwei Seitenträger, den linken Seitenträger 28 und den rechten Seitenträger 29, auf. Das leicht schräg stehende Grundgestell 21 weist außerdem rückwärtige Stützen 31 auf, die mittels Querstreben 32 und 33 mit den übrigen Teilen zu einer Einheit verbunden sind. Die Ausbildung und Abmessungen dieser Teile sind nur beispeilhaft zu verstehen. Weitere Bauteile, die insbesondere bei sehr großen Abmessungen der Schneidmaschine für eine ausreichende Steifigkeit des Grundgestelles erforderlich oder zweckmäßig wird, sind nicht dargestellt.

Für die Anlage und Halterung der plattenförmigen Werkstücke, von denen in Fig. 1 ein Werkstück 34 strichpunktiert angedeutet ist, sind am Grundgestell 11 eine Anzahl Saugnäpfe 35 vorhanden, von denen in Fig. 1 vier dargestellt sind und in Fig. 2 zwei sichtbar sind. Die in Fig. 2 als rückwärtige Begrenzungslinie des Werkstückes 34 eingezeichnete Strichpunktlinie stellt zugleich die Anlageebene 36 einerseitsder Saugnäpfe 35 und andererseits der Werkstücke 34 dar, die um ein gewisses Maß vor der Ebene der Seitenträger 28 und 29 liegt. Die Saugnäpfe 35 sind an Haltern 37 angeordnet, die gruppenweise an lotrechten Führungen 38 in der Höhe verstellbar geführt sind und daran mittels je einer Klemmvorrichtung 39 festgeklemmt werden können. Die lotrechten Führungen 38 sind ihrerseits an waagerechten Führungen 41 in waagerechter Richtung verschiebbar geführt und werden daran mittels Klemmvorrichtungen 42 festgeklemmt.

Jeder der Saugnäpfe 35 ist über je einen Verbindungsschlauch 43 mit einer Sammelleitung verbunden, die ihrerseits an einen Unterdruckerzeuger angeschlossen ist. In die Sammelleitung ist ein Absperrventil eingeschaltet, durch das die an die Verbindungsleitung angeschlossenen Saugnäpfe gemeinsam ein- und ausgeschaltet werden können. Zweckmäßigerweise wird das Absperrventil von einem Kraftantrieb betätigt, der mittels Hand- oder Fußschalter und/oder von einer Steuerschaltung ein- und ausgeschaltet wird. Jeder Saugnapf 35 weist außerdem in seinen Inneren ein Ventil auf, das als Tastventil wirkt. Es ist zwischen dem Anschluß für den Verbindungsschlauch 43 und dem Innenraum des Saugnapfes 35 eingeschaltet und in seiner Mitte angeordnet. Es weist ein Schaltglied auf, daß sich bis in den Bereich der Abschlußmembran des Saugnapfes 35 hin erstreckt. Diese Schaltglied ist so bemessen und angeordnet, daß in der Schließstellung des Tastventils sein der Abschlußmembran des Saugnapfes zugekehrte Ende um ein gewisses Maß nach außen über die Ebene der frei gespannten Abschlußmembran hinausragt und dabei die Abschlußmembran um dieses Maß nach außen ausbeult, und daß umgekehrt dann, wenn das Ende des Schaltgliedes mit der Ebene des frei gespannten Abschlußmembran bündig ist, das Tastventil in seiner Offenstellung steht. Auf diese Weise können bei geöffnetem Absperrventil in der Sammelleitung die im Flächenbereich eines Werkstückes stehenden Saugnäpfe 35 allein dadurch eingeschaltet werden, daß das Werkstück 34 gegen die Saugnäpfe 35 gelehnt wird und an sie angedrückt wird. Dadurch wird in ihrem Innern das zugehörige Tastventil durch das Schaltstück geöffnet und das Werkstück 34 durch den äußeren Luftdruck fest angedrückt und festgehalten.

In Fig. 1 sind die Saugnäpfe 35 kreisrund dargestellt. Ihre Saugfläche kann aber auch eine andere Form, beispielsweise eine langrunde Form haben, wobei die größere Achse zweckmäßigerweise waagerecht und die kürzere Achse lotrecht ausgerichtet wird. Dann können die Saugnäpfe in der Höhe dichter aneinander gerückt werden, so daß auch schmale Werkstücke, die in der Regel am Grundgestell waagerecht ausgerichtet werden, mit einer größeren Anzahl Saugnäpfe 35 festgehalten werden können.

Für das Ausrichten eines Werkstückes am Grundgestell 21 ist ein Richtscheit 45 vorhanden. Es ist waagerecht ausgerichtet und erstreckt sich zumindest annährend über die gesamte waagerechte Ausdehnung des Aufspannbereiches der Werkstücke 34. Das Richtscheit 45 weist einen einteiligen Träger 45 auf, der zu Erreichung eines möglichst günstigen Verhältnisses zwischen Tragkraft und Eigengewicht zweckmäßigerweise als Hohlträger ausgebildet ist. Er kann aus Stahl oder aus Leichtmetall hergestellt sein. Auf dem Hohlträger 46 ist eine Auflageleiste 47 angeordnet. Diese kann ebenfalls aus Metall oder auch aus Holz oder aus einem Holzwerkstoff hergestellt sein. Die Auflageleiste 47 kann aus mehreren Längenabschnitten zusammengesetzt sein, die nicht unbedingt aneinander anstoßen müssen. Sie müssen aber eine durchgehend ebene Oberseite 48 haben, die zugleich die Oberseite des gesamten Richtscheites 45 darstellt. Im Bereich dieser Oberseite 48 sind über die gesamte Länge des Richtscheites 45 hinweg in gewissen, vorzugsweise regelmäßigen, Abständen Griffmulden 49 vorhanden, deren Tiefe, normal zur Oberseite 48 gemessen, größer als die Dicke einer menschlichen Hand unter Einschluß der Verdickungen an den Knöcheln ist. Die Abmessung der Griffmulde 49 in der Längsrichtung des Richtscheites ist größer als die Breite einer menschlichen Hand.

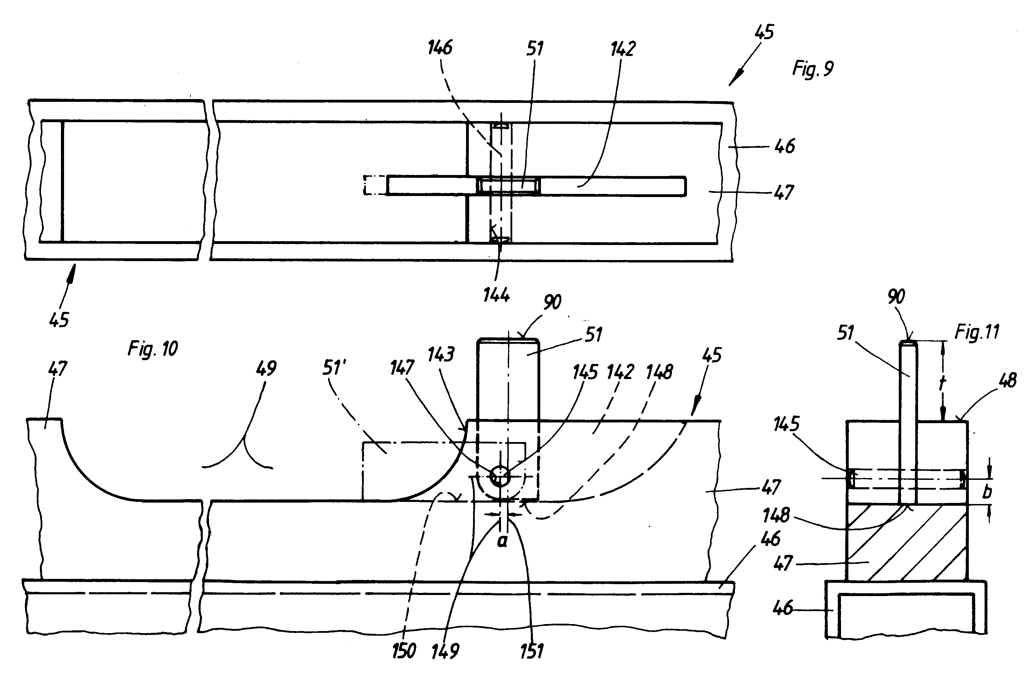

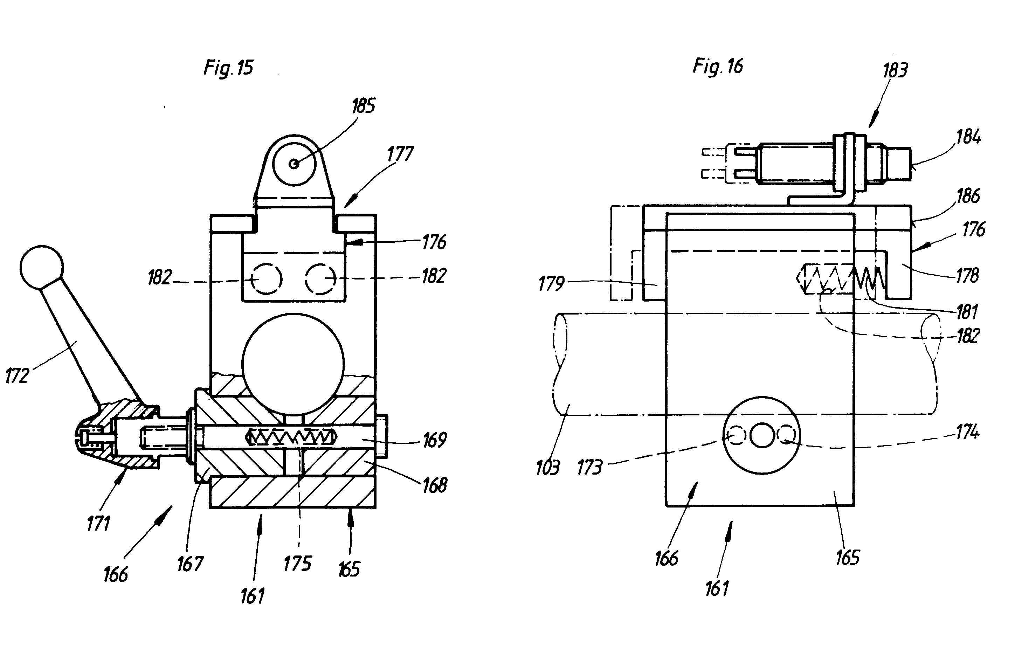

Bei einem Teil der Griffmulden, zweckmäßigerweise bei jeder Griffmulde 49, ist je eine Stützzunge 51 vorhanden, die am Richtscheit 45 in eine aufgerichtete Betriebsstellung und in eine unter die Oberseite 48 abgesenkte Ruhestellung bewegbar sind. Weitere Einzelheiten der Stützzungen 51 und der Griffmulden 49 werden später anhand Fig. 9 ... Fig. 14 näher erläutert.

Das Richtscheit 45 wird gegenüber dem Grundgestell 21 in eine Richtstellung angehoben, die aus Fig. 1 ersichtlich ist, und in eine Ruhestellung abgesenkt. Zu diesem Zweck ist eine auf die Länge des Richtscheites 45 abgestimmte Anzahl Lenker 52 vorhanden, von denen in Fig. 1 der Übersichtlichkeit halber nur je zwei Lenker am Anfang und am Ende des Richtscheites dargestellt sind. Die Lenker 52 sind einerseits an der Unterseite des Richtscheites 45 mit diesem und andereseites an der Oberseite des Längsträger 26 mit diesem mittels je eines Scharniergelenkes 53 bzw. 54 gelenkig verbunden. Die Achse der Scharniergelenke ist normal zur Aufspannebene 36 der Werkstücke 34 ausgerichtet, wodurch das Richtscheit 45 parallel zu dieser Aufspannebene 36 parallel zu sich selbst auf einer kreisbogenförmigen Bewegungsbahn auf und ab bewegt werden kann.

Zum Anheben des Richtscheites 45 ist ein Kraftantrieb in Form eines pneumatischen Kolbenantriebes 55 vorhanden, der einerseits mit dem Seitenträger 28 des Grundgestelles 21 und andererseits mit dem linken Ende 56 des Richtscheites 45 gelenkig verbunden ist. Bei der Absenkbewegung des Richtscheites 45 dient der Kolbenantrieb 45 als pneumatische Bremse um ein schlagartiges Herabfallen des Richtscheites zu vermeiden.

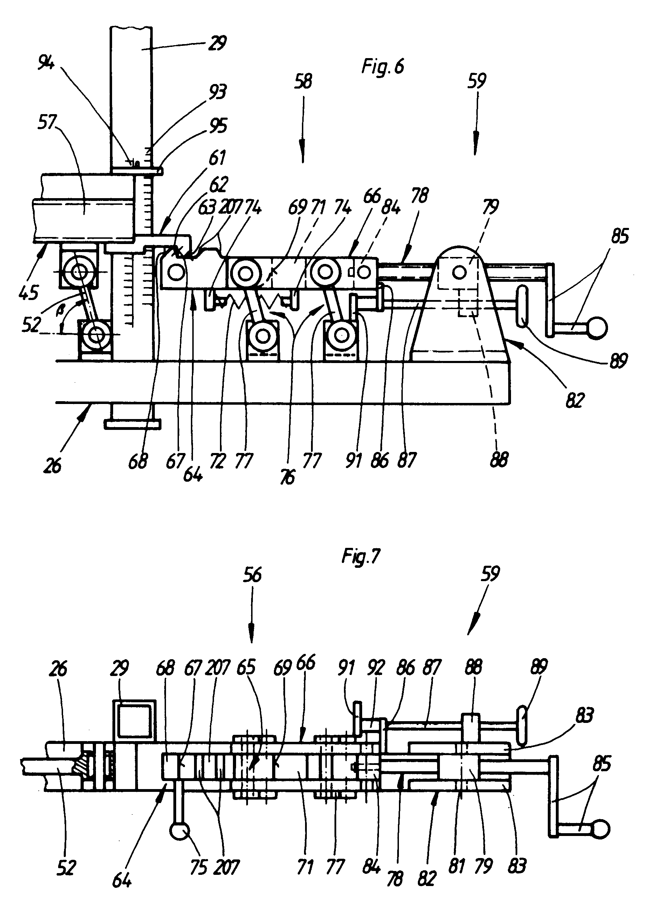

Mit dem rechten Ende 57 des Richtscheites 45 ist eine Haltevorrichtung 58 verbunden, die ihrerseits mit einer Verstellvorrichtung 59 gekoppelt ist. Beide Vorrichtungen sind aus Fig. 1 in ihrem grundsätzlichen Aufbau und in ihrer Anordnung in Bezug auf das Grundgestell 21 und das Richtscheit 45 dargestellt. Ihre Einzelheiten sind aus Fig. 6 und Fig. 7 deutlicher zu ersehen.

Die Haltevorrichtung 58 weist einen starren Teil und einen beweglichen Teil auf. Der starre Teil ist als Hakenleiste 61 mit dem rechten Ende 57 des Richtscheites 45 starr verbunden. Sein Haken ist abwärts gerichtet und weist eine Haltefläche 62 auf, deren Flächennormale zumindest annähernd waagerecht ausgerichtet ist. Auf der von der Haltefläche 62 abgekehrten Seite weist das Hakenende eine Rampenfläche 63 auf. Der bewegliche Teil der Haltevorrichtung 58 ist als Halteklinke 64 ausgebildet, die mittels eines Scharniergelenkes 65 mit waagerechter Scharnierachse mit einem Träger 66 gelenkig verbunden ist. Die Halteklinke 64 ist in ihrer Betriebsstellung (Fig. 6) zumindest annähernd waagerecht ausgerichtet. Sie ist an ihrem der Hakenleiste 61 zugekehrten Ende ebenfalls mit einem Haken versehen. Dieser ist aufwärts gerichtet und weist eine Haltefläche 67 auf, die parallel zur Haltefläche 62 an der Hakenleiste 61 ausgerichtet ist. Auf der davon abgekehrten Seite weist die Halteklinke 64 ebenfalls eine Rampenfläche 68 auf, die zumindest annähernd parallel zur Rampenfläche 63 an der Hakenleiste 61 ausgerichtet ist. An dem vom Hakenende abgekehrten hinteren Ende ist die Halteklinke 64 in der unteren Hälfte zylindrisch abgerundet, wobei die Zylinderachse dieser Rundungsfläche mit der Gelenkachse des Scharniergelenks 65 fluchtet. In der oberen Hälfte ist die Endfläche 69 rechtwinklig zur Längserstreckung der Halteklinke 64 ausgerichtet und so angeordnet, daß in der waagerechten Betriebsstellung oder Haltestellung der Halteklinke 64 ihre Endfläche 69 an einer parallel zu ihr ausgerichteten Anlagefläche eines Teils 71 des Trägers 66 anliegt. An der Unterseite der Halteklinke 64 und des Trägers 66 ist ein Federglied 72 angeordnet, das als Schraubendruckfeder ausgebildet ist. Das Federglied 72 wird an seinen beiden Enden von je einer Halterung 73 und 74 gehalten und geführt, von denen die eine Halterung 73 an der Halteklinke 64 und die andere Halterung an dem Träger 66 befestigt sind. Diese Halterungen 73 und 74 sind außerhalb der Schwenkachse des Scharniergelenks 65 der Halteklinke 64 angeordnet. Das Federglied 72 ist so ausgebildet, das es auf die Halteklinke 64 ein ausreichend großes Drehmoment ausübt, das die Haltklinke 64 in ihrer waagerechten Haltestellung hält, in der ihre Endlfläche 69 an dem Teil 71 des Trägers 66 anliegt. Am vorderen Ende der Halteklinke 64 ist ein Handgriff 75 angeordnet, mittels dessen sie aus der waagerechten Haltstellung abwärts in eine Freigabestellung geschwenkt werden kann, in der ihre Haltefläche 67 vollständig unterhalb der Haltefläche 62 an der Halteleiste 61 steht. In dieser Freigabestellung der Halteklinke 64 kann das Richtscheit 45 durch die Schwerkraft auf seine angehobene Richtstellung in seine Ruhestellung abgesenkt werden, wobei es sich auf einer durch die Länge und die Ausrichtung der Lenker 52 vorgegebenen kreisbogenförmigen Bewegegungsbahn parallel zu sich selbst bewegt.

Der Träger 66 ist mittels eines Lenkerpaares 76 mit dem unteren Querträger 26 des Grundgestelles 11 gelenkig verbunden. Die Lenker 77 des Lenkerpaares 76 sind zumindest annähernd von gleicher Länge wie die Lenker 52 des Richtscheites 45. Ihre Scharnierachsen sind parallel zu den Scharnierachsen der Lenker 52 ausgerichtet. Alle Teile der Haltevorrichtung 58 sind untereinander so abgestimmt, daß die Lenker 77 des Lenkerpaares 76 zumindest annähernd parallel zu den Lenkern 52 des Richtscheites 45 ausgerichtet sind.

Die Lenker 77 können im einzelnen wie die Lenker 52 ausgebildet sein. In Fig. 6 und Fig. 7 sind die Lenker 77 nicht als einzelne Stange sondern mit je zwei Laschen dargestellt, die durch einen Steg miteinander verbunden sind und die voneinander einen so großen lichten Abstand haben, daß sie an der Außenseite des Trägers 66 anliegen. Bei dem der Halteklinke näher gelegenen Lenker 77 dient der Gelenkbolzen des Scharniergelenkes 65 zugleich als oberer Gelenkbolzen für diesen Lenker 77.

Die Verstellvorrichtung 59 weist eine Verstellspindel 78 auf, die mit einer Spindelmutter 79 zusammenwirkt. Diese ist mittels eines Zapfengelenkes 81 an einem Lagerbock 82 mit zwei Seitenwangen 83 um eine waagerechte Achse schwenkbar gelagert. Das dem Träger 66 zugekehrten Ende der Verstellspindel 78 ist zapfenförmig ausgebildet und in einem Kupplungsblock 84 drehbar, aber in Längsrichtung unverschieblich, gelagert. Der Kupplungsblock 84 selbst ist mittels eines Zapfgelenkes mit waagerecht ausgerichteter Drehachse in den beiden Seitenwangen des Träger 66 schwenkbar gelagert. Am entgegengesetzten Ende der Verstellspindel 78 ist eine Kurbel 85 befestigt. Durch die schwenkbare Lagerung der Spindelmutter 79 und des Kupplungsblocks 84 kann das vordere Ende der Verstellspindel 78 der kreisbogenförmigen Bewegungsbahn des Träger 66 folgen, wenn dieser durch Verdrehen der Verstellspindel 78 vom Lagerbock 82 weg oder auf ihn zu verstellt wird.

Die Haltevorrichtung 58 und die Verstellvorrichtung 59 sind so aufeinander und auf das Richtscheit 45 abgestimmt, daß in der Richtstellung des Richtscheites 45 seine Lenker 52 mit der Waagerechten einen Winkel β (Fig. 6) einschließen, der kleiner als 90° ist. Dadurch führt das von der Haltevorrichtung 58 in der Richtstellung festgehaltene Richtscheit 45 bei einer Verstellung der Verstellvorrichtung 59 um ein gewisses Maß eine Verstellbewegung aus, die wegen der kreisbogenförmigen Führung durch die Lenker 52 neben einer waagerechte Komponente zugleich auch eine lotrechte Komponente einschließt.

Für das Richtscheit 45 gibt es eine bestimmte höchste Richtstellung gegenüber dem Grundgestell 21 die der waagerechten Grundlinie 60 des Schneidwerkzeuges 24 entspricht. Das ist die obere Tangentialebene des Schneidwerkzeuges 24 (Fig. 1), oberhalb der das Schneidwerkzeug 24 auf seinem unteren Arbeitsweg nicht mehr schneidet. Damit beim Einstellen das Richtscheites 45 auch nicht unabsichtlich über seine oberste Richtstellung hinaus verstellt werden kann, ist die Verstellvorrichtung 59 mit einem Endanschlag 86 versehen. Dieser wirkt mit der von der Hakenleiste 61 abgekehrten Stirnseite des Trägers 66 zusammen. Der Endanschlag 86 wird mittels einer Einstellspindel 87 auf die genaue Endstellung eingestellt, in der er dann mittels einer Gegenmutter festgeklemmt wird. Die Einstellspindel 87 wird von einer Spindelmutter 88 geführt und gehalten, die am Lagerbock 82 befestigt ist. Zum Verstellen der Einstellspindel 87 ist an ihrem vom Endanschlag 86 abgekehrten Ende ein Handrand 89 angebracht.

Bei aufgestellten Stützzungen 51 hat das Richtscheit 45 eine zweite oberste Richtstellung. Bei dieser fluchtet die Oberkante 90 (Fig. 10 und 11) der aufgerichteten Stützzungen 51 mit der waagerechten Grundlinie 60 des Schneidwerkzeuges 24. Dafür muß das Richtscheit 45 um den Überstand t der Stützzungen 51 über die Oberseite 48 des Richtscheites 45 (Fig. 11) abgesenkt werden. Deshalb weist die Verstellvorrichtung 59 noch einen zweiten Endanschlag 91 auf, der von der Spindelmutter 88 eine entsprechende Strecke weiter entfernt ist, als der Endanschlag 86. Der zweite Endanschlag 91 ist an einer drehbaren Hülse 92 befestigt, mittels der er bei Bedarf in die Bewegungsbahn des Trägers 66 hinein- und herausbewegt werden kann.

Damit das Richtscheit 45 auch auf Einstellwerte unterhalb seiner beiden obersten Richtstellungen eingestellt werden kann, ohne daß dafür umständliche Meßvorgänge erforderlich sind, sind an einem Teil des Grundgestelles 21, hier am rechten Seitenträger 29, zwei Einstellskalen 93 und 94 angebracht. Zur Erleichterung der Ablesung dieser Einstellskalen ist am Richtscheit 45 ein Ableselineal 95 angeordnet, das sich bis in den Bereich der beiden Einstellskalen 93 und 94 hin erstreckt. Diese beiden Skalen 93 und 94 sind so angeordnet, daß das Ableselineal 95 jeweils in einer der beiden obersten Richtstellungen des Richtscheites 45 gerade auf die Nullmarke der betreffenden Einstellskala eingestellt ist.

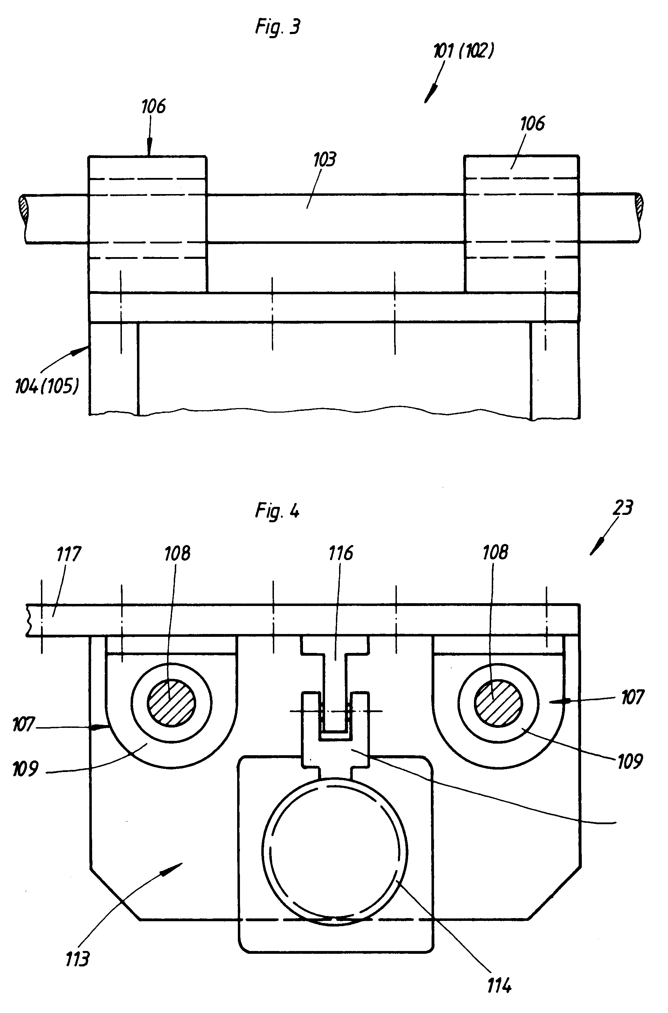

Am Grundgestell 21 sind für den Laufwagen 22 eine untere Führung 101 und eine obere Führung 102 angeordnet. Jede dieser beiden Führungen 101 und 102 weist je zwei zylindrische Führungstangen 103 auf (Fig. 2), von denen in Fig. 1 der Übersichtlichkeit halber nur eine Führungsstange 103 dargestellt ist. Der Laufwagen 22 weist einen unteren Wagenteil 104 und einen oberen Wagenteil 105 auf. Beide Wagenteile weisen für jede Führungsstange 103 je zwei Kugelführungen 106 auf (Fig. 3), die einen C-förmigen Aufriß haben. Diese Aufrißform der Kugelführungen 106 ermöglicht es, die Führungsstangen 103 auch zwischen ihren beiden Endbefestigungen in gewissen Abständen mittels nicht dargestellter Stützen mit dem unteren Längsträger 26 bzw. dem oberen Längsträger 27 zu verbinden und dadurch sowohl waagerecht wie auch lotrecht abzustützen.

Die beiden Wagenteile 104 und 105 sind mit lotrecht ausgerichteten Streben miteinander verbunden, die in der Zeichnung der Übersichtlickeit halber nicht dargestellt sind. Daneben weist der Laufwagen 22 eine lotrechte Führung 107 für den Arbeitswagen 23 auf. Diese Führung 107 wird durch zwei zylindrische Führungsstangen 108 gebildet, die parallel zur Anlageebene 36 in einem bestimmten gegenseitigen Abstand nebeneinander angeordnet sind. Am Arbeitswagen 23 sind je zwei Kugelführungen 109 vorhanden die auf je einer der beiden Führungsstangen 108 laufen. Sie sind in Fig. 4 mit geschlossener Ringform dargestellt. Soweit es für eine ausreichende Steifigkeit der Führungsstangen 108 erforderlich ist, daß die Führungsstange 108 entweder untereinander und/oder an den nicht dargestellten Streben mittels Stützen abgestützt werden, dann werden an Stelle der ringförmig geschlossenen Kugelführungen 109 solche Kugelführungen verwendet, die einen C-förmigen Aufriß haben, wie das bei den Kugelführungen 106 am Laufwagen 22 der Fall ist.

Der Laufwagen 22 wird am Grundgestell 21 in beiden Richtungen mittels eines Kraftantriebes 111 verschoben. Dieser Kraftantrieb 111 wird durch zwei pneumatische Kolbenantriebe 112 gebildet, von denen der eine entlang dem unteren Längsträger 26 und der andere entlang dem oberen Längsträger 27 angeordnet ist (Fig. 2). Diese waagerechten Kolbenantriebe 112 sind in Fig. 1 der Übersichtlichkeit halber nicht dargestellt. Aus Fig. 2 ist zu ersehen, daß jeder dieser beiden Kolbenantriebe 112 zwischen den zugehörigen beiden Führungsstangen 103 angeordnet ist.

Der Arbeitswagen 23 wird am Laufwagen 22 aufwärts und abwärts mittels eines Kraftantriebes 113 verschoben. Er wird durch einen pneumatischen Kolbenantrieb 114 gebildet, der in der Mittelebene zwischen den Führungsstangen 108 angeordnet ist (Fig. 1 und 2). Außerdem ist ein in Fig. 1 und Fig. 2 nicht dargestellter Gewichtsausgleich mit einem Gegengewicht vorhanden, das an den ebenfalls nicht dargestellten Streben des Laufwagens 22 geführt und über einen Seilzug mit dem Arbeitswagen 22 verbunden ist.

Die Kolbenantriebe 112 und 114 sind ohne Kolbenstange ausgeführt. Bei ihnen ist stattdessen der Kolben mit einem Kolbenbügel 115 verbunden, der durch einen Längsschlitz des Zylinders des Kolbenantriebes in radialer Richtung seitlich herausragt. Die Abdichtung dieses Längsschlitzes erfolgt mittels zweier Dichtungsbänder. Mit dem Kolbenbügel 115 ist ein Koppelglied 116 in einer Weise gekoppelt, die nach Möglichkeit nur parallel zur Längsachse des Kolbenantriebes 114 ausgerichtete Kräfte hervorruft und quer dazu ausgerichtete Kräfte nach Möglichkeit vermeidet. Das Koppelglied 116 ist mit dem Arbeitsschlitten 23 fest verbunden.

Am Arbeitswagen 23 ist auf der von der Haltevorrichtung 58 des Richtscheites 45 abgekehrten Seite eine Tragplatte 117 vorhanden, die im einfachsten Falle als Verlängerung einer entsprechenden Platte des Arbeitswagens 23 selbst ausgebildet ist. An dieser Tragplatte 117 ist außerhalb des Arbeitswagens 23 und außerhalb der ihr benachbarten Führungsstange 108 das Schneidwerkzeug 25 angeordnet (Fig. 1 und 2). Das Schneidwerkzeug 24 ist als Fräser 118 ausgebildet, dessen Schneiden vorteilhafterweise durch Hartmetall-Wendeplatten gebildet werden, die am Fräserkörper festgeklemmt sind. Der Fräser 118 sitzt unmittelbar auf dem Wellenstummel eines Antriebsmotors 119 der seinerseits an der Tragplatte 117 befestigt ist. Diese Befestigung ist zweckmäßigerweise so ausgebildet, daß der Antriebsmotor 119 in Richtung seiner Motorwelle eingestellt werden kann, damit der auf der Antreibswelle sitzende Fräser 118 auf die Anlageebene 36 der Werkstücke 34 und auf diese selbst richtig eingestellt werden kann. Der Fräser 118 wird überlicherweise von einem nicht dargestellten Berührungsschutz zum Teil umgeben, der zugleich als Absaughaube für die Frässpäne ausgebildet ist und als solcher mit einer ebenfalls nicht dargestellten Absaugleitung verbunden ist.

Der in Fig. 1 lediglich als Stange angedeutete Meßwagen 25 wird an seinem unteren und an seinem oberen Ende mittels je zweier Kugelführungen 121 an einer der unteren und einer der oberen Führungsstangen 103 für den Laufwagen 22 geführt, wie aus Fig. 8 näher zu ersehen ist, wo zwecks besserer Übereinstimmung mit Fig. 1 nur je eine der Führungenstangen 103 dargestellt ist. Der Meßwagen 25 ist ohne Kraftantrieb. Er wird von Hand zwischen einer Ruhestellung und einer Meßstellung hin und her verfahren. In der in Fig. 1 angedeuteten Ruhestellung ist der Meßwagen 25 vom Aufspannbereich der Werkstücke soweit zurückgezogen, daß die Werkstücke frei abgenommen und aufgelegt werden können. Zu diesem Zweck ist auch der Laufwagen 22 mit dem Arbeitswagen 23 in eine entsprechende Ruhestellung zurückgezogen, die in Fig. 1 strichpunktiert eingezeichnet ist. In der aus Fig. 8 ersichtlichen Meßstellung ist der Meßwagen 25 an den Aufspannbereich der Werkstücke 34 herangefahren. In dieser Meßstellung ist er mittels einer Verriegelungsvorrichtung 122 verriegelbar.

Diese Verriegelungsvorrichtung 122 weist zwei Riegelstangen 123 auf, die sich von einer gemeinsamen Betätigungsvorrichtung 124 nach unten bzw. nach oben bis zu je einer Riegelplatte 125 erstrecken, wo das konisch zugeschärfte Ende der Riegelstangen 123 in eine entsprechend gestaltete Ausnehmung eingreifen kann.

Der Meßwagen 25 weist mehrere Meßzungen 126 auf, von denen in Fig. 8 zwei dargestellt sind. Diese Meßzungen 126 sind in je einem Führungsgehäuse 127 in waagerechter Richtung bewegbar geführt. Im Inneren des Führungsgehäuses 17 ist eine Andrückfeder 128 untergebracht, die auf die zugehörige Meßzunge 126 eine Kraft in Richtung auf den Aufspannbereich der Werkstücke 34 hin ausübt. Die Meßzungen 126 sind mit je einem in Fig. 8 nicht dargestellten Anschlag versehen, an dem die einzelne Meßzunge in ihrer Ruhestellung anliegt, in der sie am weistesten aus dem Führungsgehäuse 127 herausragt. Die Führungsgehäuse 127 sind am Meßwagen 25 in der Höhe verstellbar angeordnet. Sie werden mittels einer Klemmvorrichtung 129 in der gewünschten Höhe am Meßwagen 25 festgeklemmt.

Die Meßzungen 126 sind mit einer Einstellskala mit Einstellsymbolen oder mit einer Meßskala 131 versehen, die in einem Fenster des Führungsgehäuses 127 sichtbar ist, wo mit Hilfe einer Ablesemarke 132 der Einstellwert oder Meßwert der Meßzungen 126 abgelesen werden kann.

Wie in Fig. 8 angedeutet ist, dienen die Meßzungen 126 der Abtastung der ihnen zugekehrten Rohkante 133 eines Werkstückes 34, das auf dem Richtscheit 45 entweder unmittelbar oder auf einigen seiner Stützzungen 51 mittelbar aufgestellt ist. Mit Hilfe der Meßzungen 126 kann festgestellt werden, ob die Rohkante 133 sich an allen Stellen außerhalb der lotrechten Grundlinie 134 des Schneidwerkzeuges 24 befindet, die in Fig. 8 als Strichpunktlinie eingezeichnet ist. Das ist die dem Aufspannbereich der Werkstücke zugekehrte lotrechte Tangentialebene des Schneidwerkzeuges 24, wenn der Laufwagen 22 sich in seiner rechten Betriebs-Endstellung befindet. Bei der Darstellung in Fig. 8 wurde angenommen, daß das Werkstück 34 sich bereits in der richtigen Stellung befindet. Wenn das nicht der Fall ist, wird das Werkstück bei ausgeschalteten Saugnäpfen 35 so weit in Richtung auf den Meßwagen 25 hin verschoben, daß alle eingesetzten Meßzungen 126 einen Überstand der Rohkante 133 über die lotrechte Grundlinie 134 anzeigen.

Die Meßzungen 126 können neben oder auch an Stelle der visuell ablesbaren Meßskala 131 mit einem Signalgeber ausgerüstet sein, der in oder an dem Führungsgehäuse 127 angeordnet ist und der Meßsignale bei einer oder bei einigen bestimmten Einstellungen der Meßzungen 126 abgibt, oder der eine dichte Folge von Signalen abgibt wenn die Meßzunge 126 gegenüber dem Führungsgehäuse 127 bewegt wird. In allen Fällen können die Meßsignale in einer Auswerteschaltung ausgewertet werden und daraus für die Bedienung der Schneidmaschine bestimmte Anzeigesignale erzeugt und angezeigt werden. Dadurch können auch Steuervorgänge ausgelöst werden.

Neben den Meßzungen 126 ist am Meßwagen 25 noch eine Einstellstange 135 vorhanden, die an einem Schlitten 136 angeordnet ist, der am Meßwagen 25 in der Höhe verstellbar geführt ist und mittels einer Klemmvorrichtung 137 daran in einer bestimmten Höhenstellung festgeklemmt werden kann. An dem dem Anlagebreich der Werkstücke zugekehrten Ende der Einstellstange 135 sind zwei Anschlagköpfe 138 und 139 angeordnet. Diese Anschlagköpfe sitzen an einem gemeinsamen Halter 141, der am freien Ende der Einstellstange 135 um deren Längsachse drehbar gelagert ist. Die Anschlagköpfe 138 und 139 sind an dem Halter 141 so angeordnet, daß in der aus Fig. 8 ersichtlichen Stellung des Halters 141, in der die beiden Anschlagköpfe parallel zur Anlageebene der Werkstücke 34 übereinander stehen, sowohl die beiden Anschlagköpfe 138 und 139 wie auch der Halter 141 sich hinter der Anlageebene 36 befinden, und zwar genau genommen sogar hinter der Arbeitsebene des Fräsers 118 (Fig. 2). Durch eine Drehung des Halters 141 um 90° in der einen oder anderen Drehrichtung wird entweder der Anschlagkopf 138 oder der Anschlagkopf 139 in die Ebene der Werkstücke 34 geschwenkt.

Der Anschlagkopf 138, der von dem Anlagebereich der Werkstücke 34 einen größeren Abstand hat, ist starr am Halter 141 angeordnet. Der Anschlagkopf 139, der sich vom Halter 141 aus näher zum Anlagebereich der Werkstücke 34 hin erstreckt, ist in waagerechter Richtung, das heißt parallel zur Längsachse der Einstellstange 135, gegenüber dem Halter 141 um einen gewissen Einstellbereich von wenigsten 20 mm verstellbar. Dafür ist er zweckmäßigerweise mit einer Einstellskala ausgerüstet. Eine solche kann auch neben ihm angeordnet sein. Dadurch kann bei bestimmten Werkstücken bei einer an beiden lotrechten Kanten vorzunehmenden Bearbeitung die Bearbeitungszugabe entweder je zur Hälfte oder in einem anderen bestimmten Verhältnis sehr genau aufgeteilt werden.

Im folgenden werden anhand Fig. 9 ... Fig. 11 einige Einzelheiten der Stützzungen 51 näher erläutert. Wie aus Fig. 10 ersichtlich ist, ist in der Auflageleiste 47 des Richtscheites 51 im Anschluß an eine Griffmulde 49 etwa in der Längsmitte der Auflageleiste 47 eine Längsnut 142 angebracht, deren Breite zumindest annähernd gleich oder höchstens geringfügig größer als die Dicke einer Stützzungen 51 ist. Die Tiefe der Längsnut 142 ist größer als die Breite des Stützzunge 51 so daß die Stützzungen 51 in der umgeklappten Stellung vollständig in die Längsnut 142 eintauchen und nicht mehr über die Oberseite 48 des Richtscheides 45 herausragen. Ihre von der Endfläche 142 der Griffmulde 49 aus gemessene Länge richtet sich nach der Art des Bearbeitungsvorganges, durch den die Längsnut 142 an der Auflageleiste 47 angebracht wird. Sie richtet sich zum Teil auch nach den Abmessungen der Stützzunge 51, wobei darauf zu achten ist, daß die Stützzunge in der umgeklappten Stellung in der sie mit 51ʹ bezeichnet ist, zumindest so weit aus der Längsnut 142 heraus in die Griffmulde 49 hineinragt, daß sie mit den Fingern einer Hand bequem erfaßt werden und aufgerichtet werden kann.

Im Bereich der Längsnut 142 ist ein Durchgangsloch 144 vorhanden, daß rechtwinklig zur Längserstreckung des Richtscheites 45 ausgerichtet ist. In deises Durchgangsloch 144 ist ein Gelenkstift 145 eingesteckt, der der schwenkbaren Lagerung und Führung der Stützzunge 51 dient. Die Längsachse des Gelenkstiftes 145 bildet die Schwenkachse 146 der Stützunge 51. Diese weist zur Aufnahme des Gelenkstiftes 145 ein Durchgangsloch 147 auf, das in der Nähe ihrer Unterkante 148 gelegen ist. Die Zylinderachse des Durchgangsloches 147, die durch den Schnittpunkt der beiden rechtwinklig sich kreuzenden Strichpunktlinien 149 verkörpert wird, hat von der auf die Längsersteckung der Stützzunge 51 bezogene Schwerelinie 151 einen Abstand a. In Richtung der Längserstreckung der Stützzunge 51 hat die Zylinderachse des Durchgangsloches 147 von der Unterkante 148 einen Abstand b (Fig. 11), der gleich der Differenz zwischen der halben Breite der Stützzunge 51 und dem Achsversatz a ist. Dadurch liegt der Schwerpunkt der Stützzunge 51 in der aufgerichteten Stellung auf der einen Seite und in der umgeklappten Stellung 51ʹ auf der anderen Seite der Schwenkachse 146. Dadurch ist in beiden Stellungen der Stützzunge 51 eine stabile Lage gegeben. Die aufrechte Stellung der Stützzunge 51 wird dabei dadurch festgelegt, daß die Schwenkachse 146 vom Nutgrund 150 der Längsnut 142 einen Abstand hat, der zumindest annähernd gleich dem Maß b ist, so daß der Nutgrund 150 dem jenseits der Schwerelinie 151 gelegenen Teil der Unterkante 148 als Anlagefläche dienen kann. Die Seitenflächen der Stützzungen 51 sind in dem Winkelbreich zwischen den beiden Strichpunktlinien 149 als Zylinderfläche ausgebildet, deren Zylinderachse mit der Zylinderachse des Durchgangsloches 147 fluchtet.

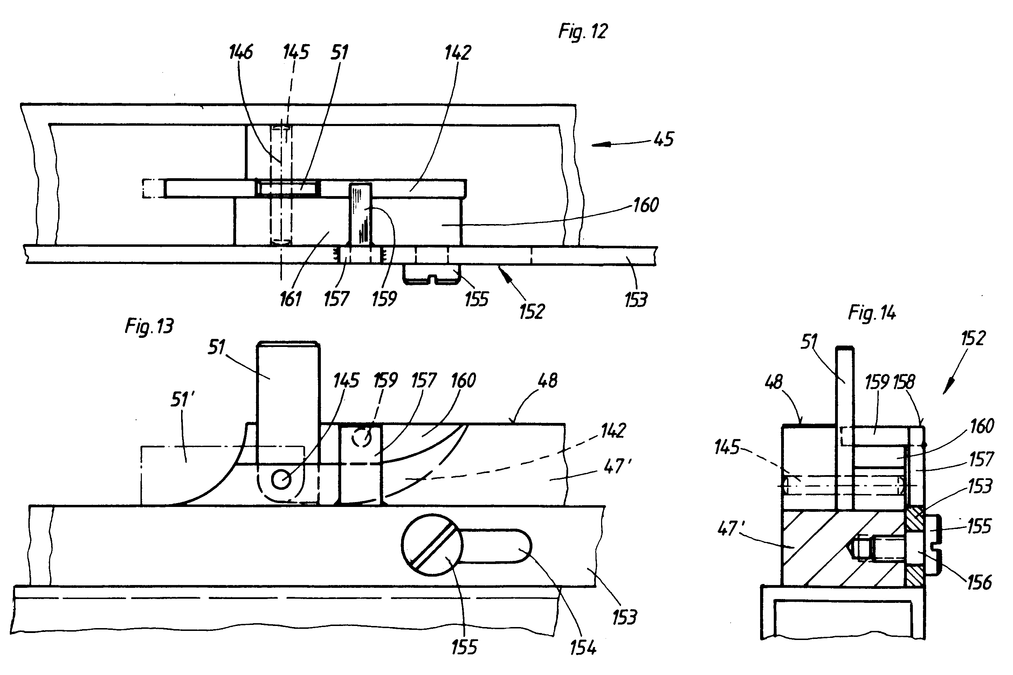

Aus Fig. 12 ... Fig. 14 ist eine Betätigungsvorrichtung 152 für die Stützzungen 51 zu ersehen, mittels der alle aufgerichteten Stützzungen 51 gemeinsam in ihre abgesenkte Stellung 51ʹ umgeklappt werden können. Diese Betätigungsvorrichtung 152 weist eine Betätigungsstange 153 auf, die auf der Vorderseite des Richtscheites 45 parallel zu dessen Längserstrekung verschiebbar geführt ist. Dafür sind in der Betätigungsstange einige langrunde Ausnehmungen 154 angebracht, durch die je eine Bundschraube 155 mit einem auf die Ausnehmung 154 abgestimmten Führungsbund 156 hindurchgesteckt ist und in der Auflageleiste 47ʹ festgeschraubt ist.

In der Nachbarschaft einer jeden Stützzunge 51 ist an der Betätigungsstange 153 je ein Betätigungslappen 157 befestigt, und zwar im allgemeinen angeschweißt. Die Höhe der Betätigungslappen 157 ist so bemessen, daß ihre Oberkante 158 unterhalb der Oberseite 48 des Richtscheites 45 gelegen ist. In der Nähe der Oberkante 158 ist an jedem Betätigungslappen 157 ein Betätigungszapfen 159 befestigt, und zwar im allgemeinen angeschweist, der sich vom Betätigungslappen 157 bis in die Aufrißprojektion der Stützzunge 51 hinein erstreckt (Fig. 14). Die Betätigungslappen 157 mit ihren Betätigungszapfen 159 sind an der Betätigungsstange 153 so angeordnet, daß in deren einen Endstellung (Fig. 13) die Betätigungszapfen 159 in einer kurzen Entfernung neben einer aufgerichteten Stützzunge 51 stehen, und daß sie nach dem Verschieben der Betätigungsstange 153 in deren zweite Endstellung zumindest annähernd oberhalb des Gelenkstiftes 145 stehen, nachdem sie gegebenenfalls die zugeordnete Stützzunge 51 zuvor umgeklappt haben.

Um für die Bewegungsbahn des Betätigungzapfens 159 ausreichend Platz zu haben, ist an der Auflageleiste 47ʹ neben der Längsnut 142 für die Stützzunge 51 eine Ausnehmung 160 angebracht, die sich von der Längsnut 142 in Richtung auf den Betätigungslappen 157 hin bis zur Außenseite der Auflageleiste 47ʹ erstreckt.

Soweit eine Betätigungsstange wie die Betätigungsstange 153 zum gemeinsamen Umklappen aufrecht stehender Stützzungen 51 vorhanden ist, kann diese in einer nicht dargestellten Abwandlung an dem Haltevorrichtung 58 zugekehrten Ende mit einer Abdeckplatte verbunden sein, die so ausgebildet und angeordnet ist, daß in der einen Endstellung der Betätigungsstange (entsprechend Fig. 13), in der die Stützzungen 51 aufgerichtet werden können, die erste Einstellskala 93 (Fig. 6) verdeckt ist, und daß in der anderen Endstellung der Betätigungsstange, in der sämtlichte Stützzungen 51 umgeklappt sind, die zweite Einstellskala 94 abgedeckt ist. Dadurch werden Ablesefehler und Einstellfehler am Richtscheit 45 vermieden.

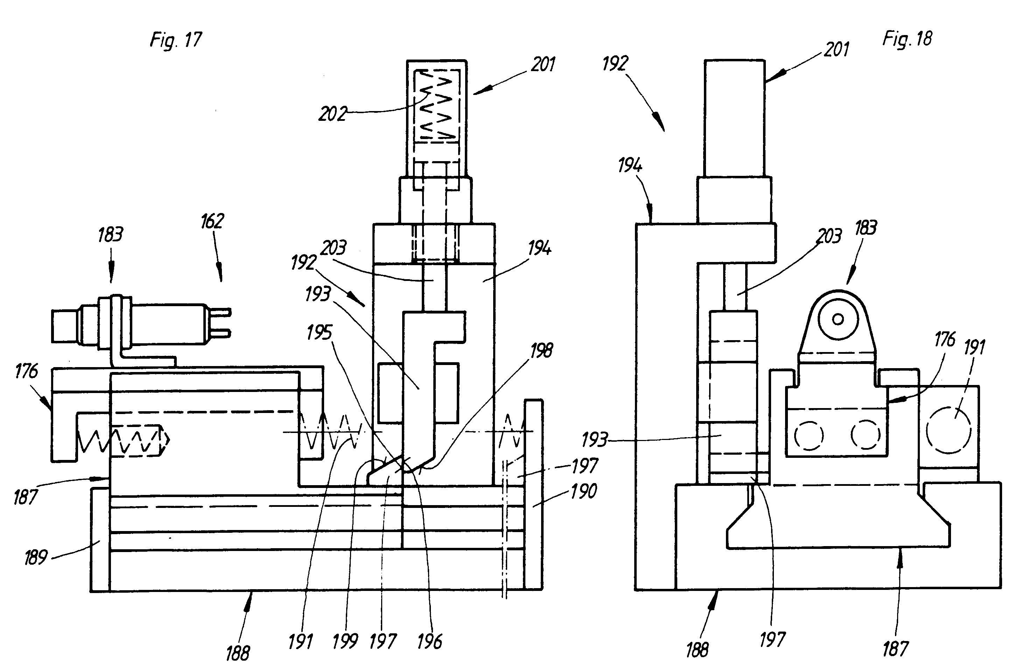

Für einen gesteuerten Umlauf des Schneidwerkzeuges 24 um ein Werkstück 34 herum, bei dem sämtliche vier Kanten des Werkstückes genau auf Maß bearbeitet werden, sind vier Anschläge vorhanden. Die beiden waagerecht wirkenden Anschläge, die Horizontalanschläge 161 und 162, sind am Grundgestell 21 in der Bewegungsbahn des Laufwagens 22 angeordnet, und zwar zweckmäßigerweise in der Bewegungsbahn seines unteren Wagenteils 104. Die beiden lotrecht wirkenden Anschläge, die Vertikalanschläge 162 und 163, sind am Laufwagen 22 in der Bewegungsbahn des Arbeitswagens 23 angeordnet. Der eine Horizontalanschlag 161 kann in beiden Richtungen verstellt und festgeklemmt werden. Der andere Horizontalanschlag 162, der in der Nachbarschaft der Haltevorrichtung 58 sitzt, ist auf eine feste Anschlagstellung einstellbar, aus der heraus er jedoch in eine Freigabestellung verfahrbar ist, wie anhand Fig. 18 und 19 noch näher dargelegt werden wird. Der untere Vertikalanschlag 163 ist am Laufwagen 22 festgeklemmt, oder festgeschraubt, so daß er im normalen Betrieb der Schneidmaschine 20 seine einmal eingestellte Stellung stets beibehält. Dessen ungeachtet kann er im Bedarfsfalle, d.h. bei der Erstmontage oder nach einer Reparatur, mit Hilfe von Werkzeugen ein- oder nachgestellt werden.

Das gilt auch bei einem Wechsel oder Austausch des Fräsers 148 gegen einen Fräser mit einem anderen wirksamen Schneidendurchmesser. Durch den quasi feststehenden Vertikalanschlag 173 wird nämlich die waagerechte Grundlinie 60 des Schneidwerkzeuges 24 auf eine bestimmte Höhe gegenüber dem Grundgestell 21 festgelegt, auf die beispielsweise auch das Richtscheit 45 und seine Einstellskala 93 ausgerichtet sind. Der obere Vertikalanschlag 164 ist ebenso wie der Vertikalanschlag 161 auf einfache Weise verstellbar, wie anhand Fig. 15 und Fig. 16 anschließend dargelegt wird.

Für die einstellbaren Anschläge, d.h. für den Horizontalanschlag 161 und für den oberen Vertikalanschlag 164, ist zweckmäßigerweise je eine Einstellskala vorhanden, die sich über den gesamten Einstellbereich des betreffenden Anschlages erstreckt. Mit Hilfe dieser Einstellskalen, die in Fig. 1 nicht dargestellt sind, kann jeder dieser beiden Anschläge unmittelbar, das heißt ohne Zuhilfenahme anderer Meßeinrichtungen, auf den gewünschten Abstand von der lotrechten Grundlinie 134 bzw. von der waagerechten Grundlinie 60 genau eingestellt werden.

Der Horizontalanschlag 161 weist einen Träger 165 auf, der auf einer der Führungsstangen 103 verschiebbar geführt ist und daran mittels einer Klemmvorrichtung 166 festgeklemmt werden kann. Diese Klemmvorrichtung 166 weist zwei Klemmbacken 167 und 168 auf, die mittels einer Klemmspindel 169 und einer Knebelmutter 171 mit einem Handgriff 172 festgeklemmt werden können. Die Klemmbacken 167 und 168 weisen je zwei parallel zur Klemmspindel 169 angeordnete und paarweise miteinander fluchtende Ausnehmungen 173 und 174 auf, in die je eine Schraubendruckfeder 175 eingesetzt sind, die bei gelöster Knebelmutter 171 die Klemmbacken 167 und 168 etwas auseinander drücken, so daß der Träger 165 auf der Führungsstange 103 leichter verschoben werden kann.

Auf der von der Klemmvorrichtung 166 angekehrten Seite des Trägers 165 ist ein Anschlagglied 176 angeordnet. Es ist am Träger 165 mittels einer Gleitführung 177 nach Art eines Nutensteines parallel zur Führungsstange 103 verschiebbar geführt. Das Anschlagglied 176 weist zwei Anschlaglappen 178 und 179 auf, die an seinen beiden Enden geordnet sind und die sich von Anschlagglied 176 weg im rechten Winkel in Richtung auf die Führungsstange 103 hin erstrecken. Der lichte Abstand zwischen den beiden Anschlaglappen 178 und 179 ist um ein gewisses Maß von etwa 10 mm größer als die in Längsrichtung der Führungsstangen 103 gemessene Breite des Trägers 165. Hinter dem vorderen Anschlaglappen 178 sind zwei Schraubendruckfedern 181 in je einem auf sie abgestimmten Aufnahmeloch 182 im Täger 165 angeordnet. Sie stützen sich auf der Rückseite des vorderen Anschlages 178 ab und sind so ausgebildet, daß sie zum einen das Anschlagglied 186 soweit nach vorne schieben, daß sein hinterer Anschlaglappen 179 am Träger 165 anliegt, und daß sie zum anderen eine Verschiebung des Anschlaggliedes 176 nach hinten zulassen, bis der vordere Anschlaglappen 178 am Träger 165 anliegt. Die erstgenannte Stellung, die Ruhestellung, ist in Fig. 16 ausgezogen dargestellt. Die zweitgenannte Stellung, die Anschlagstellung, ist in Fig. 16 strichpunktiert eingezeichnet.

Auf dem Anschlagglied 176 ist ein pneumatisches Steuerglied 183 herkömmlicher Bauart so befestigt, daß seine Stirnseite 184 mit der, mitten darin angeordneten Steuerdüse 185 mit der vorderen Stirnfläche 186 des Anschlaggliedes 176 bündig ist.

In den Fällen, in denen die Führungsstangen 103 wegen ihrer Länge auch zwischen den an ihren Enden angeordneten Haltern mit zusätzlichen Stützen abgestützt werden müssen, die ein vollständiges Umgreifen der Führungsstange 103 ausschließen, ist der Träger 165 und seine Klemmvorrichtung 166 entsprechend zu gestalten, beispielsweise die Klemmvorrichtung 166 auf der gleichen Seite der Führungsstange 103 anzuordnen wie der Anschlagteil 176, damit die Anschläge über die Stützstellen hinweg verschoben und auch an den Stützstellen festgeklemmt werden können.

Die nachgiebige Anordnung des Anschlaggliedes 176 und des Steuergliedes 183 ermöglicht es, daß der Laufwagen 22 bei einer Annäherung an den Horizontalanschlag 161 schon eine gewisse Strecke vor dem Erreichen der eingestellten Endstellung ein Steuersignal auslöst, durch das die Energiezufuhr zu den waagerecht arbeitenden Kolbenantrieben 112 abgeschaltet wird. Danach fährt der Laufwagen 22 nur noch unter der verminderten Energie des in den Zylinder enthaltenen Druckluftvolumens weiter, bis das Anschlagglied 176 mit seinem vorderen Anschlaglappen 178 am Träger 165 anliegt und den Laufwagen anhält. Der dann in den Zylindern immer noch vorhandene Restdruck bewirkt, daß der Laufwagen 22 gegen dem Horizontalanschlag 161 gedrückt bleibt, bis die Kolbenantriebe 112 in der umgekehrten Richtung mit Druckluft beaufschlagt werden und in der ursprünglichen Richtung entlüftet werden. Das vom Steuerglied 183 erzeugte Steuersignal bewirkt gleichzeitig in einer nicht dargestellten pneumatischen Steuerung, daß der lotrecht wirkende Kolbenantrieb 114 eingeschaltet wird und den Arbeitswagen 23 an der Führung 107 aufwärts (oder abwärts) verfährt.

Wenn das Schneidwerkzeug 24 nach einer ersten Horizontalbewegung entlang seiner waagerechten Grundlinie 60 bis zur Anlage am Horizontalanschlag 161 verfahren wurde, wird der Arbeitswagen 23 zunächst aufwärts bewegt, bis er an dem oberen Vertikalanschlag 164 sich anlegt und nach Auslösen eines Steuersignales in der eingestellten Endstellung am Vertikalanschlag 164 angehalten wird. Das Steuersignal, das vom Steuerglied des oberen Vertikalanschlages 164 ausgelöst wurde, bewirkt eine Umsteuerung der waagerechten Kolbenantriebe 112, die dadurch den Laufwagen 22 in seine rechte Betriebs-Endstellung zurückfahren. Wenn der Laufwagen 22 dort angekommen ist, löst er am zweiten Horizontalanschlag 162 wiederum ein Steuersignal aus, das dazu führt, daß der Arbeitswagen 23 von der Anlage am oberen Vertikalanschlag 164 weg abwärts nach unten verfahren wird, bis er am unteren Vertikalanschlag 163 anlangt und dort wiederum ein Steuersignal auslöst. Mit diesem letzten Steuersignal ist ein Umlauf des Schneidwerkzeuges 24 um ein Werkstück 34 beendet. Daher schaltet dieses letzte Steuersignal nicht die waagerechten Kolbenantriebe 112 wieder ein, sondern es löst eine Rückzugsbewegung des Laufwagens 22 aus, wie nachfolgend anhand Fig. 17 und Fig. 18 näher dargelegt wird.

Bei dem Horizontalanschlag 162 sind das Anschlagglied 176 und das Steuerglied 183 genauso ausgebildet, wie bei den übrigen Anschlägen. Sein Träger 187 ist jedoch abgewandelt. Er ist seinerseits in einer Führung 188 in Schwalbenschwanzausführung in waagerechter Richtung um ein gewisses Maß verschiebbar geführt. Diese Führung 188 ist entweder unmittelbar am Grundgestell 21 oder an der unteren Führung 101 des Laufwagens 22 fest angeordnet. Die Führung 188 ist mit einer vorderen Wegbegrenzung 189 und mit einer hinteren Wegbegrenzung 190 für den Träger 187 ausgerüstet. Der Träger 187 ist mit einem Federglied 191 gekoppelt, das sich einerseits an der hinteren Wegbegrenzung 190 und andererseits am Träger 187 abstützt und das auf diesen eine Kraft in Richtung auf die vordere Wegbegrenzung 189 hin ausübt. Diese aus Fig. 18 ersichtliche Stellung des Trägers 187 stellt die Betriebsstellung oder Anschlagstellung des Horizontalanschlages 162 dar, in der der Laufwagen 22 sich an ihm anlegt, wenn er von den waagerechten Kolbenantrieben 112 zurückgeführt wurde.

Damit der Horizontalanschlag 162 den Laufwagen 22 in seiner rechten Arbeitsstellung auffangen und festhalten kann, ist eine Verriegelungsvorrichtung 192 vorhanden. Sie weist einen Riegel 193 auf, der an einer Führung 194 in lotrechter Richtung verschiebbar geführt ist. Der Riegel 193 weist eine rechtwinklig zur Bewegungbahn des Trägers 187 ausgerichtete Anlagefläche 195 auf, die mit einer parallel dazu ausgerichteten Anlagefläche 196 zusammenwirkt, die Teil einer Riegelnase 197 ist, die am hinteren Ende des Trägers 187 seitlich neben dem Anschlagteil 176 befestigt ist. Der Riegel 193 weist eine von der Riegelnase 197 abgekehrten Rampenfläche 198 auf und die Riegelnase 197 weist eine vom Riegel 193 abgekehrte Rampenfläche 199 auf, die beide aufeinander abgestimmt und zueinander parallel ausgerichtet sind. Der Riegel 193 ist mit seiner Führung 194 so angeordnet, daß seine Anlagefläche 195 gerade an der Anlagefläche 196 der Riegelnase 197 anliegt, wenn der Träger 187 an der vorderen Wegbegrenzung 189 anliegt.

Der Riegel 193 ist mit einem pneumatischen Kolbenantrieb 201 verbunden, der an der Führung 194 befestigt ist. Der Kolbenantrieb 201 ist nur einfachwirkend und weist im Inneren seines Zylinders eine Rückholfeder 202 auf, die mit dem Kolben verbundene Kolbenstange 203 ausfährt. Mit dieser Kolbenstange 203 ist der Riegel 193 fest verbunden. Durch die Rückholfeder 202 wird der Riegel 192 in seine abgesenkte Verriegellungsstellung geschoben, aus der er durch Einschalten des Kolbenantriebes 201 in seine Freigabestellung angehoben werden kann.

Wenn der Arbeitswagen 23 nach dem Bearbeiten der rechten lotrechten Kante eines Werkstückes am unteren Vertikalanschlag 163 angelangt ist und er dabei ein Steuersignal ausgelöst hat, wird von der Steuerschaltung der Schneidmaschine der Kolbenantrieb 201 eingeschaltet. Dieser hebt den Riegel 193 aus der Verriegelungsstellung in die Freigabestellung an. Der Träger 187 des zweiten Horizontalanschlages 162 ist dann frei. Aufgrund des in den beiden waagerechten Kolbenantrieben 112 noch vorhanden Restdruckes wird der am Horizontalanschlag 162 anliegende Laufwagen 22 nach rechtes verschoben, bis der Träger 187 an der hinteren Wegbegrenzung 190 sich anlegt. Der in den waagerechten Kolbenantrieben 112 dann immer noch vorhandene, wenn auch verminderte Restdruck, hält den Laufwagen 22 und den Arbeitswagen 23 in der in Fig. 1 rechts strichpunktiert dargestellten Stellung fest, in der sie mit 22ʹ bzw. 23ʹ bezeichnet sind. In deiser Ausgangsstellung dieser Teile befindet sich das Schneidwerkzeug 24 ausreichend weit außerhalb des Anlagebereiches der Werkstücke, so daß diese ohne Behinderung auf dem angehobenen Richtscheit 45 abgestellt und nach ihrer Ausrichtung von den Saugnäpfen 35, festgehalten werden können.

Für die Bearbeitung des nächstfolgenden Werkstückes wird über eine Starttaste die Steuerschaltung der Schneidmaschine aktiviert, die daraufhin die waagerechten Kolbenantriebe 112 einschaltet, die zunächst den Laufwagen aus seiner Ausgangsstellung 22ʹ nach links in Richtung auf den Aufspannbereich der Werkstücke hin verschieben. Der Träger 187 des zweiten Horizontalanschlages 162 folgt unter der Wirkung seines Federgliedes 192 dem wegfahrenden Laufwagen 22 nach, bis er an seiner vorderen Wegbegrenzung 189 anschlägt. Ein kurzes Stück vorher trifft die Riegelnase 197 mit ihrer Rampenfläche 199 auf die Rampenfläche 198 des abgesenkten Riegels 193 und hebt diesen an, bis die Riegelnase 197 unter dem Riegel 193 hindurchgleiten kann. Solbald der Träger 197 an der vorderen Wegbegrenzung 189 angelangt ist, gibt die Riegelnase 197 den Riegel 193 wieder frei, der daraufhin von der Rückholfeder 202 im Kolbenantrieb 201 in seine Verriegelungsstellung nach unten verschoben wird. Dadurch befindet sich der zweite Horizontalanschlag 162 wieder in seiner Anschlagstellung, in der das Schneidwerkzeug 24 auf die lotrechte Grundlinie 134 eingestellt ist.

Die Steuerschaltung der Schneidmaschine ist zweckmäßigerweise so eingerichtet, daß sie das Schneidwerkzeug 24 nicht nur auf einem vollständigen Umlauf um ein aufgespanntes Werkstück herumführt, um dieses an allen vier Kanten zu bearbeiten, sondern daß sie auch auf einen einfachen Hin- und Rücklauf des Laufwagens 22 umgeschaltet werden kann, bei dem beim Auftreffen des Laufwagens 22 auf den ersten Horizontalanschlag 161 der lotrechtwirkende Kraftantrieb 113 des Arbeitswagens 23 ausgeschaltet bleibt. Eine solche Steuerung kommt dann in Betracht, wenn am Werkstück nur eine einzige Kante, nämlich die untere Längskante, bearbeitet werden soll.

Wenn bei einem Werkstück hingegen nur die beiden Längskanten nicht aber die Querkanten bearbeitet werden sollen, wird die Steuerschaltung wieder, wie zuerst beschrieben, auf einem Umlauf des Schneidwerkzeuges 24 eingestellt. Hierbei wird aber das Werkstück zuvor am Grundgestell 21 so ausgerichtet , daß seine rechte Querkante einen gewissen Abstand von der lotrechten Grundlinie 134 des Schneidwerkzeuges hat und diese Querkante daher bei der abschließenden Abwärtsbewegung des Schneidwerkzeuges 24 von diesem nicht erreicht wird. Außerdem wird der linke Horizontalanschlag 161 jenseits der linken Querkante des Werkstückes auf einen gewissen Abstand von ihr eingestellt, so daß bei der Aufwärtsbewegung des Arbeitswagens 22 zum oberen Vertikalanschlag 164 hin das Schneidwerkzeug 24 auch die linke Querkante des Werkstückes nicht erreicht. Eine besondere Eilgangschaltung für die lotrechten Bewegungsabschnitte des Schneidwerkzeuges 24 ist nicht erforderlich, weil das Schneidwerkzeug 24 dabei keine Schneidarbeit verrichtet, so daß die Gegenkräfte des vertikalen Kraftantriebes 113 sehr gering sind und der Arbeitswagen 23 dadurch verhältnismäßig schnell aufwärts bzw. abwärts bewegt wird.

Wenn beim Betätigen der Starttaste das Richtscheit 45, etwa aus Unachtsamkeit, noch nicht abgesenkt worden sein sollte, würde das herannahende Schneidwerkzeug 24 voll in das Richtscheit 45 hineinfahren, weil dieses in der Richtstellung sich in der Bewegungsbahn des Schneidwerkzeuges 24 entlang der unteren Längskante des Werkstückes 34 befindet. Um das zu verhindern, ist am Arbeitswagen 23 ein Steuerglied in Form eines Steuernockens 204 mit zwei entgegengesetzt zueinander ausgerichteten Rampenflächen 205 angeordnet. In der Bewegungsbahn dieses Steuernockens 204 ist an der Halteklinke 64 der Haltevorrichtung 58 ebenfalls ein Steuerglied in Form eines Steuernockens 206 mit zwei entgegengesetzt zueinander ausgerichteten Rampenfläche 207 angeordnet. Diese beiden Steuernocken 204 und 206 sorgen dafür, daß die Halteklinke 64 das Richtscheit 45 freigibt, noch ehe das Schneidwerkzeug 24 das Richtscheit 45 erreicht hat. Die zweite Rampenfläche an den Steuernocken 204 und 206 dient dazu, bei der umgekehrten Bewegungsrichtung des Arbeitswagens 23 ein Überfahren des Steuernockens 206 an der Halteklinke 64 zu ermöglichen.

Anstelle der Steuernocken 204 und 206, zweckmäßigerweise jedoch zusätzlich zu ihnen, kann die Halteklinke 64 auch mit einem pneumatischen Kolbenantrieb ausgerüstet sein, der vorzugsweise einfachwirkend ist und der von der Steuerschaltung der Schneidmaschine immer dann eingeschaltet wird, wenn ein Startsignal gegeben wurde. Er bewegt dann die Halteklinke 64 entgegen der Kraft ihres Federgliedes 72 aus der Haltestellung in die Freigabestellung, in der das Richtscheit 45 allein unter der Wirkung der Schwerkraft sich in seine abgesenkte Ruhestellung bewegt.

Die Schneidmaschine 20 kann weiterhin in nicht dargestellter Weise dahingehend abgewandelt sein, daß das Grundgestell 21ʹ nicht starr aufgestellt ist, sondern daß es in seinem unteren Bereich um eine waagerecht ausgerichtete Schwenkachse schwenkbar gelagert ist. Mittels einer Hubvorrichtung, etwa in Form hydraulicher Kolbenantriebe, in Form von Spindeltrieben oder in Form von Kettentrieben, kann das Grundgestell 21ʹ aus der leicht schräg geneigten aufrechten Stellung, in der sich die plattenförmigen Werkstücke besonders leicht daran aufstellen lassen, in eine stärker geneigte Stellung geschwenkt werden, in der die Anlageebene der Werkstücke mehr oder minder weit der Waagerechten genähert ist. In einer solchen stärker geneigten Stellung sind die Saugnäpfe am Grundgestell 21ʹ mehr oder minder stark bis vollständig von der Aufnahme der Gewichtskraft des Werkstückes entlastet, so daß sie nur noch die verhältnismäßig geringen Schnittkräfte des Schneidwerkzeuges aufnehmen müssen. Das kann bei solchen Werkstücken von Vorteil sein, die eine sehr rauhe und/oder eine unebene Oberfläche haben. Das gilt insbesondere dann, wenn das betreffende Werkstück zusätzlich noch eine sehr lange Bearbeitungsdauer erfordert, während der die Haftkraft der Saugnäpfe allmählich unter einen bestimmten Grenzwert absinken könnte.

In einer weiteren nicht dargestellten abgewandelten Ausführungsform der Schneidmaschine können die waagerechten und lotrechten Kraftantriebe für die Bewegung des Laufwagens bzw. des Arbeitswagens als Seilzüge oder Kettentriebe ausgebildet sein, die mit mechanischen, pneumatischen oder hydraulischen Antrieben zusammenwirken, oder sie können als mechanische Antriebe in der Form von Leitspindel- oder Zugspindelantrieben ausgebildet sein.

## Patentansprüche

1. Schneidmaschine für plattenförmige Werkstücke, mit den Merkmalen:
- es ist ein rahmenartiges Grundgestell vorhanden, das zumindest annähernd aufrecht steht und gegenüber der Lotrechten in Aufwärtsrichtung nach hinten geneigt ist,
- das Grundgestell ist mit Anlageelementen für die Werkstücke versehen, die in einer gemeinsamen Anlageebene parallel zum Grundgestell angeordnet sind,
- das Grundgestell weist eine waagerecht ausgerichtete Auflageleiste für die Werkstücke auf,
- im unteren und oberen Bereich des Grundgestelles ist je eine waagerechte Führung vorhanden,
- an den waagerechten Führungen ist ein Laufwagen oder Laufschlitten in waagerechter Richtung verfahrbar geführt,
- am Grundgestell sind zwei waagerecht wirkende Anschläge (Horizontalanschläge)für den Laufwagen oder Laufschlitten vorhanden, von denen wenigstens einer einstellbar ist,
- der Laufwagen oder Laufschlitten weist wenigstens eine bezüglich der Aufrißebene lotrechte Führung auf, die parallel zum Grundgestell ausgerichtet ist,
- an der lotrechten Führung des Laufwagens ist ein Arbeitswagen oder Arbeitsschlitten parallel zum Grundgestell aufwärts und abwärts verfahrbar geführt,
- am Laufwagen sind zwei lotrecht wirkende Anschläge (Vertikalanschläge) für den Arbeitswagen oder Arbeitsschlitten vorhanden, von denen wenigstens einer einstellbar ist,
- der Arbeitswagen oder Arbeitsschlitten trägt ein rotierendes Schneidwerkzeug mit einem Antrieb,
**gekennzeichnet** durch die Merkmale:
- die Anlageelemente sind als Saugnäpfe (35) ausgebildet, die einzeln und/oder gemeinsam ein- und ausschaltbar sind,
- die Auflageleiste ist als Richtscheit (45) ausgebildet, das am Grundgestell (21) mittels Führungen (52) in eine Richtstellung anhebbar und in eine Ruhestellung absenkbar ist,
- das Richtscheit (45) ist in der Richtstellung mittels einer betätigbaren Haltevorrichtung (58) verriegelbar, deren einer Teil (61) mit dem Richtscheit (45) und deren anderer Teil (64) mit dem Grundgestell (21) verbunden ist,
- das Schneidwerkzeug (24) ist als Fräser (118) ausgebildet, dessen Rotationsachse normal zur Anlageebene (36) der Werkstücke (34) ausgerichtet ist.

2. Schneidmaschine nach Anspruch 1,
**gekennzeichnet** durch das Merkmal:
- die Saugnäpfe (35) sind wenigstens zum Teil an Haltern (37) angeordnet, die mittels Führungen (41; 38) am Grundgestell (21) in waagerechter und/oder in lotrechter Richtung verstellbar sind.

3. Schneidmaschine nach Anspruch 1 oder 2,
**gekennzeichnet** durch das Merkmal:
- von den beiden Teilen (61; 64) der Haltevorrichtung (58) ist bevorzugt der mit dem Grundgestell (21) verbundene Teil (64) an einem Träger (66) angeordnet, der gegenüber dem Hauptteil (21) vorzugsweise in der gleichen Weise wie das Richtscheit (45) auf einer zu dessen Bewegungsbahn gleichen oder parallelen Bewegungsbahn bewegbar geführt ist und mittels einer Verstellvorrichtung (59) um ein gewisses Maß verstellbar ist.

4. Schneidmaschine nach Anspruch 3
**gekennzeichnet** durch die Merkmale:
- eine Einstellskala (93) und ein Ableselineal (95) sind einerseits am Grundgestell (21; 29) und andererseits am Richtscheit (45) oder umgekehrt angebracht,
- die Einstellskala (93) und das Ableselineal (95) sind vorzugsweise so angeordnet, daß bei der Einstellung des Ableselineals (95) auf die Nullmarke der Einstellskala (93) die Oberseite (48) des Richtscheites (45) sich gerade auf der Höhe einer waagerechten Grundlinie (50) des Schneidwerkzeuges (24) befindet, die vorzugsweise dadurch festgelegt ist, daß der untere Vertikalanschlag (163) für den Arbeitswagen (23) oder Arbeitsschlitten am Laufwagen (22) fest angeordnet ist.

5. Schneidmaschine nach einem der Ansprüche 1 bis 4,
**gekennzeichnet** durch das Merkmal:
- als Führung für das Richtscheit (45) sind eine Anzahl Lenker (52) gleicher Länge vorhanden, die parallel zueinander ausgerichtet sind und am Grundgestell (21;26) und am Richtscheit (45) angelenkt sind, wobei die Gelenkachsen normal zur Anlageebene (36) der Werkstücke (34) ausgerichtet ist,
- die Lenker (52) sind bevorzugt so ausgebildet und angeordnet, daß sie in der Richtstellung des Richtscheites (52) mit der Waagerechten einen Winkel (β) einschließen, der kleiner als 90° ist.

6. Schneidmaschine nach einem der Ansprüche 1 bis 5,
**gekennzeichnet** durch die Merkmale:
- das Richtscheit (45) ist mit einem Kraftantrieb gekoppelt, der vorzugsweise als pneumatischer Kolbenantrieb (55) ausgebildet ist.

7. Schneidmaschine nach einem der Ansprüche 1 bis 6,
**gekennzeichnet** durch die Merkmale:
- beide Teile (61; 64) der Haltevorrichtung (58) weisen je eine aufeinander abgestimmte Haltefläche (62; 67) auf, deren Flächennormale vorzugsweise parallel zur Bewegungsbahn des Richtscheites (45) im Bereich dessen Richtstellung ausgerichtet ist,
- von beiden Teilen (61; 64) ist vorzugsweise der mit dem Grundgestell (21) verbundene Teil (64) mittels einer Führung (65) bewegbar geführt, deren Führungsbahn zumindest annähernd parallel zu den Halteflächen (62; 67) ausgerichtet ist,
- auf der von der Haltefläche (62; 67) abgekehrten Seite ist zumindest an einem Teil, vorzugsweise an beiden Teilen (61; 64), eine Rampenfläche (63; 68) vorhanden, die in der Bewegungsrichtung auf die Richtstellung des Richtscheites (45) hin eine Überführung der einen Haltefläche (62) vor die andere Haltefläche (67) bewirken,
- bevorzugt ist ein Federglied (72) vorhanden, das auf den bewegbaren Teil (64) eine Kraft in Richtung auf die Haltestellung hin ausübt.

8. Schneidmaschine nach Anspruch 7,
**gekennzeichnet** durch das Merkmal:
- der bewegbare Teil der Haltevorrichtung (58) ist als Halteklinke (64) ausgebildet, die mittels eines Scharniergelenkes (65) schwenkbar gelagert ist, dessen Scharnierachse waagrecht ausgerichtet ist.

9. Schneidmaschine nach Anspruch 7 oder 8,
**gekennzeichnet** durch das Merkmal:
- der bewegbare Teil der Haltevorrichtung bzw. die Halteklinke (64) weist ein Steuerglied, vorzugsweise in Form eines Steuernockens (206) mit zwei entgegengesetzt zueinander angeordneten Rampenflächen (207) auf, das in der waagerechten Bewegungsbahn eines Teils (204) des Laufwagens oder des Arbeitswagens (23) an einer Stelle angeordnet ist, bei der das Schneidwerkzeug (24) am Arbeitswagen (23) das in der Richtstellung befindliche Richtscheit (45) noch nicht erreicht hat.

10. Schneidmaschine nach einem der Ansprüche 1 bis 9,
**gekennzeichnet** durch das Merkmal:
- der Träger (66) für den einen Teil (64) der Haltevorrichtung (58) ist mit dem Grundgestell (21; 26) mittels eines Lenkerpaares (76) verbunden, dessen Lenker (77) die gleiche Länge wie die Lenker (52) des Richtscheites (45) haben und die zumindest annähernd parallel zu jenen ausgerichtet sind.

11. Schneidmaschine nach Anspruch 10,
**gekennzeichnet** durch das Merkmal:
- die Verstellvorrichtung (59) der Haltevorrichtung (58) weist eine Verstellspindel (78) auf und ist mit einem, vorzugsweise verstellbaren, Endanschlag (86) für den Träger (66) ausgerüstet, der in der Bewegungsrichtung des Richtscheites (45) auf die Richtstellung hin wirkt.

12. Schneidmaschine nach einem der Ansprüche 1 bis 11,
**gekennzeichnet** durch das Merkmal:
- der bewegbare Teil (64) der Haltevorrichtung (58) ist mit einem Kraftantrieb, vorzugsweise in Form eines pneumatischen Kolbenantriebes gekoppelt, mittels dessen der bewegbare Teil (64) zumindest aus seiner Haltestellung in eine Freigabestellung bewegbar ist.

13. Schneidmaschine nach einem der Ansprüche 1 bis 12,
**gekennzeichnet** durch die Merkmale:
- das Richtscheit (45) ist auf seiner Oberseite (48) mit einer Anzahl Stützzungen (51) ausgerüstet, die von der Aufspannebene (36) der Werkstücke (37) einen gewissen Abstand (s) haben, der vorzugsweise mindestens 3 mm beträgt,
- die Stützzungen (51) sind am Richtscheit (45) in eine Ruhestellung absenkbar, in der sie sich vollständig unterhalb der Oberseite (45) des Richtscheites (45) befinden, und in eine Arbeitsstellung anhebbar, in der ihre vom Richtscheit (48) abgekehrte Oberkante (90) um ein gewisses Maß (t) über die Oberseite (48) des Richtscheites (45) hinausragt.

14. Schneidmaschine nach Anspruch 13,
**gekennzeichnet** durch die Merkmale:
- die Stützzungen (51) sind im Bereich ihres unteren Endes mittels einer Schwenkachse (146) schwenkbar gelagert, die rechtwinkelig zur Längserstreckung des Richtscheites (45) ausgerichtet ist,
- bevorzugt ist die Schwenkachse (146) außerhalb der Schwerelinie (151) bezüglich der Längserstreckung der Stützzunge (51) angeordnet, wobei in der Arbeitsstellung der Stützzunge (51) ihr jenseits der Schwerelinie (151) gelegener Teil der Unterkante (148) sich bis zu einer Anlagefläche (150) am Richtscheit (45) hin erstreckt und dort abstützt.

15. Schneidmaschine nach Anspruch 14, mit Stützzungen, die alle in der gleichen Richtung umklappbar sind,
**gekennzeichnet** durch die Merkmale:
- eine Betätigungsstange (153) ist am Richtscheit (45) parallel zu dessen Längserstreckung verschiebbar geführt,
- entweder ist an der Betätigungsstange (153) eine der Anzahl der Stützzungen (51) gleiche Anzahl Betätigungszapfen (159) in der Weise angeordnet, daß in der einen Stellung der Betätigungsstange (153) je einer der Betätigungszapfen (159) neben einer aufgerichteten Stützzunge (51) steht, die bei einer Bewegung der Betätigungsstange (153) durch den Betätigungszapfen (159) in ihre abgesenkte Ruhelage (45') umklappbar ist,
- oder jede Stützzunge ist mit einem Betätigungszapfen versehen, der bei aufgerichteter Stützzunge in die Bewegungsbahn je einer Anschlagfläche an der Betätigungsstange hineinragt, mittels der die Stützzunge umklappbar ist.

16. Schneidmaschine nach einem der Ansprüche 13 bis 15,
**gekennzeichnet** durch die Merkmale:
- am Grundgestell (21; 29) oder am Richtscheit ist entweder eine zweite Einstellskala (94) angebracht, die mit dem vorhandenen Ableselineal (95) zusammenwirkt, oder es ist ein zweites Ableselineal angebracht, das mit der vorhandenen Einstellskala zusammenwirkt,
- die zweite Einstellskala (94) oder das zweite Ableselineal sind so angeordnet, daß bei der Einstellung des Ableselineals (95) auf die Nullmarke der zweiten Einstellskala (94) bzw. bei der Einstellung des zweiten Ableselineals auf die Nullmarke der einen Einstellskala die Oberkante (90) der angehobenen Stützzungen (51) mit der waagerechten Grundlinie (60) des Schneidwerkzeuges (24) fluchtet.

17. Schneidmaschine nach Anspruch 16 in Verbindung mit Anspruch 15,
**gekennzeichnet** durch das Merkmal:
- die Betätigungsstange (153) für die Stützzungen (51) ist mit mit einer Abdeckplatte in der Weise gekoppelt, daß in der Stellung der Betätigungsstange (153), in der die Stützzungen (51) durch sie abgesenkt sind, die erste Einstellskala (93) sichtbar und die zweite Einstellskala (94) vorzugsweise vollständig verdeckt ist bzw. das erste Ableselineal sichtbar und das zweite Ableselineal vorzugsweise vollständig verdeckt ist, und daß in der anderen Stellung der Betätigungsstange (153) die Reihenfolge umgekehrt ist.

18. Schneidmaschine nach einem der Ansprüche 13 bis 17 in Verbindung mit einem der Ansprüche 3 bis 12,
**gekennzeichnet** durch die Merkmale:
- die Verstellvorrichtung (59) ist mit einem, vorzugsweise einstellbaren, zweiten Endanschlag (91) für den Träger (66) der Haltevorrichtung (58) ausgerüstet,
- von beiden Endanschlägen (86; 91) ist wenigstens der dem Aufspannbereich der Werkstücke (34) näher gelegene Endanschlag (91) aus der Bewegungsbahn des Trägers (66), vorzugsweise rechtswinklig zu dieser Bewegungsbahn, herausbewegbar geführt.

19. Schneidmaschine nach einem der Ansprüche 1 bis 18,
**gekennzeichnet** durch die Merkmale:
- bevorzugt an derjenigen Seite des Grundgestelles (21), die der Ausgangsstellung oder Ruhestellung des Laufwagens (22) entspricht, ist ein Meßwagen (25) oder Meßschlitten mittels einer waagerechten Führung, bevorzugt mittels der waagerechten Führung (101; 102) für den Laufwagen (22), zwischen einer dem Aufspannbereich der Werkstücke (34) angenäherten Meßstellung und einer davon zurückgezogenen Ruhestellung bewegbar geführt,
- der Meßwagen (25) oder Meßschlitten ist mit einer oder vorzugsweise mit mehreren Meßzungen (126) ausgerüstet, die am Meßwagen (25) oder Meßschlitten mittels je einer Führung (127) in zumindest annähernd waagrechter Richtung bewegbar geführt sind,
- bevorzugt sind die Führungen (127) der Meßzungen (126) am Meßwagen (25) oder Meßschlitten in der Höhe verstellbar angebracht.

20. Schneidmaschine nach Anspruch 19,
**gekennzeichnet** durch die Merkmale:
- der Meßwagen (25) oder Meßschlitten ist zumindest in der Meßstellung mittels einer Verriegelungsvorrichtung (122) verriegelbar,
- bevorzugt sind die Meßzungen (126) mit einem in der Bewegungsrichtung auf den Aufspannbereich der Werkstücke (34) hin wirkenden Anschlag versehen und mit je einer Andrückfeder (128) gekoppelt, die auf die Meßzungen (126) eine Kraft in Richtung auf den Anschlag hin ausübt.

21. Schneidmaschine nach Anspruch 19 oder 20,
**gekennzeichnet** durch das Merkmal:
- zumindest ein Teil, vorzugsweise alle der Meßzungen (126) sind mit je einem Signalgeber ausgerüstet, von denen jeder ein Steuersignal beim Überschreiten oder Unterschreiten eines einstellbaren Grenzwertes der Einstellung der zugehörigen Meßzunge (126) abgibt.

22. Schneidmaschine nach einem der Ansprüche 17 oder 21,
**gekennzeichnet** durch die Merkmale:
- am Meßwagen (25) oder Meßschlitten ist eine Einstellstange (135) angeordnet, die an ihrem vorderen Ende zwei Anschlagköpfe (138; 139) aufweist,
- beide Anschlagköpfe (138; 139) sind mittels einer Führung (141) in eine Anschlagstellung bewegbar, in der der betreffende Anschlagkopf (138; 139) in der Ebene des Werkstückes (34) steht, und in eine Ruhestellung bewegbar, in der der betreffende Anschlagkopf hinter der Aufspannebene (36) der Werkstücke (34) und hinter der Bewegungsbahn des Schneidwerkzeuges (24) steht,
- von beiden Anschlagköpfen (138; 139) ist der eine Anschlagkopf (138) starr und der andere Anschlagkopf (139) waagerecht und parallel zur Aufspannebene (36) der Werkstücke (34) einstellbar ausgebildet,
- bevorzugt ist die Einstellstange (135) am Meßwagen (25) oder Meßschlitten in der Höhe verstellbar angebracht.

23. Schneidmaschine nach Anspruch 22,
**gekennzeichnet** durch die Merkmale:
- die beiden Anschlagköpfe (138; 139) sind an einem gemeinsamen Halter (141) angeordnet, der am vorderen Ende der Einstellstange (135) um eine waagerechte Drehachse drehbar ist.

24. Schneidmaschine nach einem der Ansprüche 1 bis 23,
**gekennzeichnet** durch die Merkmale:
- der Laufwagen (22) oder Laufschlitten ist mit einem Kraftantrieb, vorzugsweise in Form eines pneumatischen Kraftantrieb (111; 112), gekoppelt,
- der Arbeitswagen (23) oder Arbeitsschlitten ist mit einem Kraftantrieb (113), vorzugsweise in Form eines pneumatischen Kraftantriebes (114), gekoppelt,
- die Horizontalanschläge (161; 162) für den Laufwagen (22) oder Laufschlitten und die Vertikalanschläge (163; 164) für den Arbeitswagen (23) oder Arbeitsschlitten sind vorzugsweise mit einem Signalgeber (183) für Umsteuersignale für die Kraftantriebe (111; 112; 113) gekoppelt.

25. Schneidmaschine nach einem der Ansprüche 1 bis 24,
**gekennzeichnet** durch die Merkmale:
- von den mit dem Laufwagen (22) zusammenwirkenden Horizontalanschlägen (161; 162) ist der eine Horizontalanschlag (162) mittels einer waagerecht ausgerichteten Führung (188) zwischen einer Betriebsstellung und einer Ruhestellung verschiebbar geführt, wobei in der Betriebsstellung des Horizontalanschlages (162) das Schneidwerkzeug (24) auf eine bestimmte lotrechte Schnittlinie als lotrechte Grundlinie (134) eingestellt ist, und wobei in der Ruhestellung des Horizontalanschlages (162) das Schneidwerkzeug (24) außerhalb des Aufspannbereiches für die Werkstücke (34) steht,
- in der Betriebsstellung und in der Ruhestellung des Horizontalanschlages (162) ist je eine Wegbegrenzung (189; 190) vorhanden,
- es ist eine Verriegelungsvorrichtung (192) vorhanden, mittels der der Horizontalanschlag (162) in seiner Betriebsstellung verriegelbar ist.

26. Schneidmaschine nach Anspruch 25,
**gekennzeichnet** durch die Merkmale:
- der Horizontalanschlag (162) ist mit einem Federglied (191) gekoppelt, das auf den Horizontalanschlag (162) eine Kraft in Richtung auf die Wegbegrenzung (189) für die Betriebsstellung hin ausübt,
- die Verriegelungsvorrichtung (192) weist einen Riegel (193) auf, der eine Anlagefläche (195) für den Horizontalanschlag (162) aufweist, die zumindest annähernd rechtwinkelig zur Bewegungsbahn des Horizontalanschlages (162) ausgerichtet ist,
- am Riegel (193) und/oder am Horizontalanschlag (162; 197) ist eine Rampenfläche (198; 199) angeordnet, mittels deren bei einer Bewegung des Horizontalanschlages (162) in seine Betriebsstellung hin eine Überführung der Anlagefläche (195) am Riegel (193) vor die Gegenfläche (196) am Horizontalanschlag (162; 197) bewirkt wird.

27. Schneidmaschine nach Anspruch 26,
**gekennzeichnet** durch die Merkmale:
- die Verriegelungsvorrichtung (192) ist mit einem Kraftantrieb, vorzugsweise in Form eines pneumatischen Kolbenantriebes (102) ausgerüstet, mittels dessen der Riegel (193) aus der Verriegelungsstellung in die Freigabestellung bewegbar ist,
- bevorzugt ist der Riegel (193) mit einem Federglied (202) gekoppelt, das auf den Riegel (193) eine Kraft in Richtung auf seine Verriegelungsstellung hin ausübt.

28. Schneidmaschine nach einem der Ansprüche 1 bis 27,
**gekennzeichnet** durch die Merkmale:
- das Grundgestell ist bevorzugt in der Nähe seines unteren Randes, mittels eines oder mehrerer Lager mit waagerecht ausgerichteter Lagerachse schwenkbar gelagert,
- es ist eine Schwenkvorrichtung vorhanden mittels der das Grundgestell aus der Näherungsweise aufrechten Stellung in eine stärker geneigte bis waagerechte Stellung neigbar und wieder Aufrichtbar ist,
- bevorzugt wird die Schwenkvorrichtung durch eine oder mehrere Kraftantriebe gebildet, die außerhalb der Schwenkachse am Grundgestell angreifen und die vorzugsweise als hydraulische Kolbenantriebe, als Spindeltriebe, als Kettentriebe oder als Seiltriebe ausgebildet sind.

## Claims

1. Cutting machine for panel-shaped workpieces, with the features:
- a frame-like basic mounting is provided which stands at least approximately upright and is inclined in an upward direction to the rear relative to the vertical,
- the basic mounting is provided with supporting elements for the workpieces which are arranged in a common supporting plane parallel to the basic mounting,
- the basic mounting has a horizontally orientated contact strip for the workpieces,
- a respective horizontal guide is provided in the lower and upper region of the basic mounting,
- a running carriage or running slide is guided so as to travel horizontally on the horizontal guides,
- two horizontally acting stops (horizontal stops) for the running carriage or running slide, of which at least one is settable, are provided on the basic mounting,
- the running carriage or running slide has at least one guide which is vertical with respect to the vertical projection plane and is orientated parallel to the basic mounting,
- on the vertical guide of the running carriage, a working carriage or working slide is guided so as to travel upwardly and downwardly parallel to the basic mounting,
- two vertically acting stops (vertical stops) are provided for the working carriage or working slide on the running carriage, at least one of which is settable,
- the working carriage or working slide carries a rotating cutting tool with a drive,
characterised by the features:
- the supporting elements are designed as suckers (35) which may be switched on and off individually and/or together,
- the contact strip is designed as a straight edge (45) which may be raised into a directional position and lowered into a rest position on the basic mounting (21) by means of guides (52),
- the straight edge (45) may be locked in the directional position by means of an actuable holding device (58) of which one part (61) is connected to the straight edge (45) and of which the other part (64) is connected to the basic mounting (21),
- the cutting tool (24) is designed as a milling cutter (118) of which the axis of rotation is orientated normally to the supporting plane (36) for the workpieces (34).

2. Cutting machine according to claim 1, characterised by the feature:
- the suckers (35) are arranged at least in part on holders (37) which are horizontally and/or vertically adjustable on the basic mounting (21) by means of guides (41; 38).

3. Cutting machine according to claim 1 or 2, characterised by the feature:
- of the two parts (61; 64) of the holding device (58), the part (64) connected to the basic mounting (21) is preferably arranged on a carrier (66) which is movably guided relative to the main part (21) preferably in the same manner as the straight edge (45) on a path of movement identical or parallel to its path of movement and is adjustable to a certain extent by means of an adjusting device (59).

4. Cutting machine according to claim 3, characterised by the features:
- a setting scale (93) and a reading rule (95) are arranged on the one hand on the basic mounting (21; 29) and on the other hand on the straight edge (45) or vice versa,
- the setting scale (93) and the reading rule (95) are preferably arranged such that, when the reading rule (95) is set to the zero mark of the setting scale (93), the upper side (48) of the straight edge (45) is located at the height of a horzontal base line (50) of the cutting tool (24) which is preferably fixed in that the lower vertical stop (163) for the working carriage (23) or working slide is arranged rigidly on the running carriage (22).

5. Cutting machine according to one of claims 1 to 4, characterised by the feature:
- as a guide for the straight edge (45) there are provided a number of connecting rods (52) of equal length which are orientated parallel to one another and are articulated to the basic mounting (21; 26) and to the straight edge (45), the joint axes being normal to the supporting plane (36) for the workpieces (34),
- the connecting rods (52) are preferably designed and arranged such that, in the directional position of the straight edge (52), they enclose an angle (β) with the horizontal which is smaller than 90°.

6. Cutting machine according to one of claims 1 to 5, characterised by the features:
- the straight edge (45) is coupled to a power drive which is preferably designed as a pneumatic piston drive (55).

7. Cutting machine according to one of claims 1 to 6, characterised by the features:
- the two parts (61; 64) of the holding device (58) each have a holding face (62; 67) which are adapted to one another and of which the face normal is preferably orientated parallel to the path of movement of the straight edge (45) in the region of its directional position,
- of the two parts (61; 64), the part (64) connected to the basic mounting (21) is preferably guided movably by means of a guide (65) of which the guide path is orientated at least approximately parallel to the holding faces (62; 67),
- on the side remote from the holding face (62; 67) there is provided, at least on one part, preferably on both parts (61; 64), a ramp face (63; 68) which, in the direction of movement toward the directional position of the straight edge (45), convey one holding face (62) before the other holding face (67),
- a spring element (72) which exerts a force in the direction of the holding position on the movable part (64) is preferably provided.

8. Cutting machine according to claim 7, characterised by the feature:
- the movable part of the holding device (58) is designed as a catch (64) which is mounted pivotally by means of a hinge (65) of which the hinge pin is orientated horizontally.

9. Cutting machine according to claim 7 or 8, characterised by the feature:
- the movable part of the holding device or the catch (64) has a control element, preferably in the form of a control cam (206) with two ramp faces (207) arranged opposite one another, the control element being arranged in the horizontal path of movement of a part (204) of the running carriage or of the working carriage (23) at a point at which the cutting tool (24) on the working carriage (23) has not yet reached the straight edge (45) located in the directional position.

10. Cutting machine according to one of claims 1 to 9, characterised by the feature:
- the carrier (66) for one part (64) of the holding device (58) is connected to the basic mounting (21; 26) by means of a pair (76) of connecting rods of which the connecting rods (77) have the same length as the connecting rods (52) of the straight edge (45) and which are orientated at least approximately parallel to them.

11. Cutting machine according to claim 10, characterised by the feature:
- the adjusting device (59) of the holding device (58) has an adjusting spindle (78) and is equipped with a preferably adjustable end stop (86) for the carrier (66) which acts on the directional position in the direction of movement of the straight edge (45).

12. Cutting machine according to one of claims 1 to 11, characterised by the feature:
- the movable part (64) of the holding device (58) is coupled to a power drive, preferably in the form of a pneumatic piston drive, by means of which the movable part (64) may be moved at least from its holding position into a release position.

13. Cutting machine according to one of claims 1 to 12, characterised by the features:
- the straight edge (45) is equipped, on its upper side (48), with a number of supporting tongues (51) which are at a certain distance (s), which is preferably at least 3 mm, from the clamping plane (36) of the workpieces (37),
- the supporting tongues (51) may be lowered on the straight edge (45) into a rest position in which they are located completely below the upper side (45) of the straight edge (45) and may be raised into a working position in which their upper edge (90) remote from the straight edge (48) projects a certain amount (t) beyond the upper side (48) of the straight edge (45).

14. Cutting machine according to claim 13, characterised by the features:
- the supporting tongues (51) are mounted pivotally in the region of their lower end by means of a pivot axis (146) which is orientated at right angles to the length of the straight edge (45),
- the pivot axis (146) is preferably arranged outside the gravity line (151) with respect to the length of the supporting tongue (51), its part of the lower edge (148) located on the far side of the gravity line (151) extending to a supporting face (150) on the straight edge (45) and resting there in the working position of the supporting tongue (51).

15. Cutting machine according to claim 14, with supporting tongues which may all be folded back in the same direction, characterised by the features:
- an actuating rod (153) is displaceably guided on the straight edge (45) parallel to the length thereof,
- either a number of actuating pins (159) equal to the number of supporting tongues (51) is arranged on the actuating rod (153) such that in one position of the actuating rod (153) one respective actuating pin (159) stands next to a straightened up supporting tongue (51) which may be folded back into its lowered rest position (45') by the actuating pin (159) during a movement of the actuating rod (153),
- or each supporting tongue is provided with an actuating pin which, when the supporting tongue is straightened up, penetrates into the path of movement of each stop face on the actuating rod by means of which the supporting tongue may be folded.

16. Cutting machine according to one of claims 13 to 15, characterised by the features:
- on the basic mounting (21; 29) or on the straight edge there is arranged either a second setting scale (94) which co-operates with the existing reading rule (95) or a second reading rule which co-operates with the existing setting scale,
- the second setting scale (94) or the second reading rule are arranged such that during the setting of the reading rule (95) to the zero mark of the second setting scale (94) or during the setting of the second reading rule to the zero mark of one setting scale, the upper edge (90) of the raised supporting tongues (51) is aligned with the horizontal base line (60) of the cutting tool (24).

17. Cutting machine according to claim 16 in conjunction with claim 15, characterised by the feature:
- the actuating rod (153) for the supporting tongues (51) is coupled to a covering plate such that, in the position of the actuating rod (153) in which the supporting tongues (51) are lowered by it, the first setting scale (93) is visible and the second setting scale (94) is preferably completely covered or the first reading rule is visible and the second reading rule is preferably completely covered, and such that in the other position of the actuating rod (153) the sequence is reversed.

18. Cutting machine according to one of claims 13 to 17 in conjunction with one of claims 3 to 12, characterised by the featues:
- the adjusting device (59) is equipped with a preferably settable second end stop (91) for the carrier (66) of the holding device (58),
- of the two end stops (86; 91), at least the end stop (91) located closer to the clamping region of the workpieces (34) is guided so as to be movable from the path of movement of the carrier (66), preferably at right angles to this path of movement.

19. Cutting machine according to one of claims 1 to 18, characterised by the features:
- preferably on the side of the basic mounting (21) corresponding to the starting position or rest position of the running carriage (22), a measuring carriage (25) or measuring slide is movably guided between a measuring position approaching the clamping region of the workpieces (34) and a rest position removed from it by means of a horizontal guide, preferably by means of the horizontal guide (101; 102) for the running carriage (22),
- the measuring carriage (25) or measuring slide is equipped with one or preferably with several measuring tongues (126) which are movably guided at least approximately horizontally on the measuring carriage (25) or measuring slide by means of a respective guide (127),
- the guides (127) of the measuring tongues (126) are preferably arranged adjustably in height on the measuring carriage (25) or measuring slide.

20. Cutting machine according to claim 19, characterised by the features:
- the measuring carriage (25) or measuring slide is lockable at least in the measuring position by means of a locking device (122),
- the measuring tongues (126) are preferably provided with a stop acting in the direction of movement toward the clamping region of the workpieces (34) and are coupled to a respective pressing spring (128) which exerts a force in the direction of the stop on the measuring tongues (126).

21. Cutting machine according to claim 19 or 20, characterised by the feature:
- at least a proportion, preferably all of the measuring tongues (126) are equipped with a respective signal generator, of which each one delivers a control signal when a settable limit value for the setting of the associated measuring tongue (126) is exceeded or fallen below.

22. Cutting machine according to one of claims 17 or 21, characterised by the features:
- a setting rod (135) having two stop heads (138; 139) at its front end is arranged on the measuring carriage (25) or measuring slide,
- the two stop heads (138; 139) are movable by means of a guide (141) into a stop position in which the respective stop head (138; 139) stands in the plane of the workpiece (34) and into a rest position in which the respective stop head stands behind the clamping plane (36) for the workpieces (34) and behind the path of movement of the cutting tool (24),
- of the two stop heads (138; 139), one stop head (138) is designed rigidly and the other stop head (139) is designed so as to be settable horizontally and parallel to the clamping plane (36) for the workpieces (34),
- the setting rod (135) is preferably arranged adjustably in height on the measuring carriage (25) or measuring slide.

23. Cutting machine according to claim 22, characterised by the features:
- the two stop heads (138; 139) are arranged on a common holder (141) which is rotatable round a horizontal axis of rotation at the front end of the setting rod (135).

24. Cutting machine according to one of claims 1 to 23, characterised by the features:
- the running carriage (22) or running slide is coupled to a power drive, preferably in the form of a pneumatic power drive (111; 112),
- the working carriage (23) or working slide is coupled to a power drive (113), preferably in the form of a pneumatic power drive (114),
- the horizontal stops (161; 162) for the running carriage (22) or running slide and the vertical stops (163; 164) for the working carriage (23) or working slide are preferably coupled to a signal generator (183) for reversing signals for the power drives (111; 112; 113).

25. Cutting machine according to one of claims 1 to 24, characterised by the features:
- of the horizontal stops (161; 162) co-operating with the running carriage (22), one horizontal stop (162) is displaceably guided between an operating position and a rest position by means of a horizontally orientated guide (188), the cutting tool (24) being set, in the operating position of the horizontal stop (162), to a specific vertical cutting line as vertical base line (134) and the cutting tool (24) standing outside the clamping region for the workpieces (34) in the rest position of the horizontal stop (162),
- a respective path limiting means (189; 190) is provided in the operating position and in the rest position of the horizontal stop (162),
- a locking device (192) is provided by means of which the horizontal stop (162) may be locked in its operating position.

26. Cutting machine according to claim 25, characterised by the features:
- the horizontal stop (162) is coupled to a spring element (191) which exerts, on the horizontal stop (162), a force toward the path limiting means (189) for the operating position,
- the locking device (192) has a bolt (193) which has a supporting face (195) for the horizontal stop (162) orientated at least approximately at right angles to the path of movement of the horizontal stop (162),
- on the bolt (193) and/or on the horizontal stop (162; 197) there is arranged a ramp face (198; 199) by means of which the supporting face (195) on the bolt (193) is conveyed in front of the opposing face (196) on the horizontal stop (162; 197) during a movement of the horizontal stop (162) into its operating position.

27. Cutting machine according to claim 26, characterised by the features:
- the locking device (192) is equipped with a power drive, preferably in the form of a pneumatic piston drive (102), by means of which the bolt (193) can be moved from the locking position into the release position,
- the bolt (193) is preferably coupled to a spring element (202) which exerts on the bolt (193) a force toward its locking position.

28. Cutting machine according to one of claims 1 to 27, characterised by the features:
- the basic mounting is preferably pivotally mounted in the vicinity of its lower edge by means of one or more bearings with a horizontally orientated bearing axis,
- a pivot device is provided by means of which the basic mounting may be inclined from the approximately upright position into a more markedly inclined to horizontal position and may be straightened up again,
- the pivoting device is preferably formed by one or more power drives which act on the basic mounting outside the pivot axis and are preferably designed as hydraulic piston drives, as spindle mechanisms, chain mechanisms or cable mechanisms.

## Revendications

1. Machine de coupe pour des pièces en forme de plaques ayant les caractéristiques suivantes :
- elle comprend un bâti en forme de châssis disposé au moins pratiquement verticalement et incliné vers l'arrière, par rapport à la verticale, dans la direction ascendante,
- le bâti est muni d'éléments d'appui pour les pièces, ces éléments d'appui sont prévus dans un plan d'appui commun, parallèle au bâti,
- le bâti comporte un longeron d'appui aligné horizontalement pour recevoir les pièces,
- dans la zone inférieure et la zone supérieure du bâti, se trouve chaque fois un guide horizontal,
- un chariot ou traîneau de déplacement est guidé, mobile, dans la direction horizontale sur les guides horizontaux,
- le bâti comporte deux butées (butées horizontales) agissant dans la direction horizontale pour le chariot ou le traîneau de déplacement, au moins l'une des butées étant réglable,
- le chariot ou le traîneau de déplacement comporte au moins un guide vertical par rapport au plan de travail, ce guide étant parallèle au bâti,
- un chariot ou traîneau de travail est guidé mobile en montée et en descente, parallèlement au bâti, sur le guide vertical du chariot,
- le chariot de déplacement porte deux butées d'action verticale (butées verticales) pour le chariot ou le traîneau de travail, au moins l'une des butées étant réglable,
- le chariot ou le traîneau de travail porte un outil de coupe rotatif et son moteur,
machine caractérisée par les points suivants :
- les éléments d'appui sont des ventouses (35) qui peuvent être mises en oeuvre ou hors service séparément et/ou en commun,
- le longeron d'appui est conçu comme équerre (45) qui peut être relevée à l'aide des guides (52) sur le bâti (52) dans une position d'équerre et être abaissée dans une position de repos,
- l'équerre (45) peut se verrouiller en position d'équerre à l'aide d'un dispositif de fixation (58) manoeuvrable, dont une partie (61) est reliée à l'équerre (45) et dont l'autre partie (64) est reliée au bâti (21),
- l'outil de coupe (24) est en forme de fraise (118) dont l'axe de rotation est aligné perpendiculairement au plan d'appui (36) de la pièce (34).

2. Machine de coupe selon la revendication 1, caractérisée en ce que :
- les ventouses (35) sont au moins en partie montées sur des supports (37) qui peuvent être réglés à l'aide de guides (41, 38) par rapport au bâti (21) en position horizontale et/ou verticale.

3. Machine de coupe selon la revendication 1 ou 2, caractérisée en ce que :
- sur les deux parties (61 ; 64) du dispositif de fixation (58) la partie (64) reliée au bâti (21) est prévue de préférence sur un support (66) guidé de manière mobile par rapport à la partie principale (21) de préférence de la même manière que l'équerre (45) sur une trajectoire identique à celle de l'équerre ou parallèle à celle-ci, et peut se régler d'une certaine valeur à l'aide d'un dispositif de réglage (59).

4. Machine de coupe selon la revendication 3, caractérisée en ce que :
- le bâti (21 ; 29) porte une échelle de réglage (93) et une échelle de lecture (95), ces moyens étant montés par ailleurs sur l'équerre (45) et inversement,
- l'échelle de réglage (93) et la règle de lecture (95) sont prévues de préférence pour que lors du réglage de la règle de lecture (95) sur le repère zéro de l'échelle de réglage (93), la face supérieure (48) de l'équerre (45) se trouve exactement au niveau d'une ligne de base horizontale (50) de l'outil de coupe (24) fixée de préférence en ce que la butée verticale (163) inférieure du chariot de travail (23) ou du traîneau de travail se trouve solidaire du chariot de déplacement (22).

5. Machine de coupe selon l'une des revendications 1 à 4, caractérisée en ce que :
- le guide de l'équerre (45) est constitué par un certain nombre de bras (52) de même longueur alignés parallèlement les uns par rapport aux autres et qui sont articulés au bâti (21, 26) et à l'équerre (45), les axes d'articulation étant perpendiculaires au plan d'appui (36) de la pièce (34),
- les bras (52) sont conçus et montés de préférence pour qu'en position d'utilisation de l'équerre (52) ils fassent avec la direction horizontale un angle (β) inférieur à 90°.

6. Machine de coupe selon l'une des revendications 1 à 5, caractérisée en ce que :
- l'équerre (45) est couplée à un moyen moteur qui est de préférence un vérin pneumatique (55).

7. Machine de coupe selon l'une des revendications 1 à 6, caractérisée en ce que :
- les deux parties (61 ; 64) du dispositif de fixation (58) comportent chacune une surface de fixation (62 ; 67) accordées l'une sur l'autre, et dont la perpendiculaire aux surfaces est de préférence parallèle à la trajectoire de l'équerre (45) au niveau de sa position d'équerrage,
- celle (64) des deux parties (61 ; 64) reliées au bâti (21) est de préférence guidée de manière mobile à l'aide d'un guide (65) dont la trajectoire de guidage est alignée au moins pratiquement parallèlement aux surfaces de fixation (62 ; 67),
- du côté opposé à la surface de fixation (62 ; 67) il est prévu au moins sur une partie, et de préférence sur les deux parties (61 ; 64), une surface formant rampe (63 ; 68) qui assure dans la direction de déplacement pour la position d'équerrage de l'équerre (45), un passage de l'une des surfaces de fixation (62) avant l'autre surface de fixation (67),
- il est prévu de préférence un élément à ressort (72) qui exerce sur le partie mobile (64) une force vers la position de fixation.

8. Machine de coupe selon la revendication 7, caractérisée en ce que :
- la partie mobile du dispositif de fixation (58) est en forme de lame de retenue (64) montée pivotante à l'aide d'une articulation en forme de charnière (65) et dont l'axe est horizontal.

9. Machine de coupe selon la revendication 7 ou 8, caractérisée en ce que :
- la partie mobile du dispositif de fixation ou la lame de retenue (64) comporte un organe de commande, de préférence sous la forme d'une came de commande (206) avec deux surfaces de rampes (207) opposées, prévues dans la trajectoire horizontale d'une partie (204) du chariot de déplacement ou du chariot de travail (23) à un endroit où l'outil de coupe (24) du chariot de travail (23) n'a pas encore atteint l'équerre (45) qui se trouve en position d'équerrage.

10. Machine de coupe selon l'une des revendications 1 à 9, caractérisée en ce que :
- le support (66) de la partie (64) du dispositif de fixation (58) est relié au bâti (21, 26) à l'aide d'une paire de bras (7) dont les bras (77) ont la même longueur que les bras (52) de l'équerre (45) et qui sont alignés au moins sensiblement parallèlement à cette dernière.

11. Machine de coupe selon la revendication 10, caractérisée en ce que :
- le dispositif de réglage (59) du dispositif de fixation (58) comporte une broche de réglage (78) et est équipé d'au moins une butée de fin de course (86), de préférence réglable, pour le support (66) et qui agit dans la direction de mouvement de l'équerre (45) sur la position d'équerrage.

12. Machine de coupe selon l'une des revendications 1 à 11, caractérisée en ce que :
- la partie mobile (64) du dispositif de fixation (58) est couplée à un moyen d'entraînement, de préférence sous la forme d'un vérin pneumatique, qui peut déplacer la partie mobile (64) au moins à partir de sa position de fixation jusque dans une position de libération.

13. Machine de coupe selon l'une des revendications 1 à 12, caractérisée en ce que :
- l'équerre (45) est équipée sur son côté supérieur (48) d'un nombre d'appuis (51) qui sont écartés du plan de serrage (36) des pièces (37) d'une certaine distance (s), de préférence au moins égale à 3 mm,
- les appuis (51) peuvent être abaissés sur l'équerre (45) dans une position de repos dans laquelle ces appuis se trouvent complètement en-dessous de la face supérieure (48) de l'équerre (45) et peuvent être relevés dans une position de travail dans laquelle leur bord supérieur (90) opposé à l'équerre (45), d'une certaine longueur (t) par rapport à la face supérieure (48) de l'équerre (45).

14. Machine de coupe selon la revendication 13, caractérisée en ce que :
- les appuis (51) sont montés pivotants au niveau de leur extrémité inférieure à l'aide d'un axe de pivotement (146) qui est aligné perpendiculairement à la direction longitudinale de l'équerre (45),
- l'axe de pivotement (146) se trouve de préférence à l'extérieur de la ligne de gravité (151) correspondant à la longueur des languettes d'appui (51) et en position de travail, les languettes d'appui (51) avec leur partie du bord inférieur (148) située de l'autre côté de l'axe de gravité (151) s'étendent jusqu'à une surface d'appui (150) de l'équerre (45) pour s'y appuyer.

15. Machine de coupe selon la revendication 14, comportant des languettes d'appui qui peuvent être rabattues toutes dans la même direction, caractérisée en ce que :
- une barre de manoeuvre (153) est guidée en coulissement sur l'équerre (45) parallèlement à sa grande longueur,
- soit la tige de manoeuvre (153) comporte un nombre de tétons de manoeuvre (159) correspondant à celui des languettes d'appui (51), ces tétons étant prévus de la même manière que pour une position de la tige de manoeuvre (153), chaque fois un téton de manoeuvre (153) se trouve à côté d'une languette d'appui (51), redressée, et qui peut se rabattre dans sa position de repos (45') abaissée, par un mouvement de la tige de manoeuvre (153) par l'intermédiaire des tétons de manoeuvre (159),
- soit que chaque languette d'appui comporte un téton de manoeuvre qui, lorsque la languette d'appui est redressée, pénètre dans la trajectoire d'une surface de butée correspondante portée par la tige de manoeuvre et qui permet de rabattre les languettes d'appui.

16. Machine de coupe selon l'une des revendications 13 à 15, caractérisée en ce que :
- le bâti (21 ; 29) ou l'équerre porte soit une seconde échelle de réglage (94) coopérant avec la règle de lecture (95) qui existe, soit qu'il est prévu une seconde règle de lecture qui coopère avec l'échelle de réglage existante,
- la seconde échelle de réglage (94) ou la seconde règle de lecture sont montées de manière que pour le réglage de la règle de lecture (95) sur le repère zéro de la seconde échelle de réglage (94) ou pour un réglage de la seconde règle de lecture sur le repère zéro de la première échelle de réglage, le bord supérieur (90) des languettes d'appui (51), relevé, soit aligné avec la ligne de base horizontale (60) de l'outil de coupe (24).

17. Machine de coupe selon la revendication 16 en combinaison avec la revendication 15, caractérisée en ce que :
- la tige de manoeuvre (153) des languettes d'appui (51) est couplée à une plaque de recouvrement de façon que lorsque la tige de manoeuvre (153) se trouve dans une position pour laquelle elle abaisse les languettes d'appui (51), la première échelle de réglage (93) soit visible et la seconde échelle de réglage (94) de préférence complètement cachée ou que la première règle de lecture soit visible et que la seconde règle de lecture soit de préférence complètement cachée et que dans l'autre position de la tige de manoeuvre (153), l'ordre soit inversé.

18. Machine de coupe selon l'une des revendications 13 à 17, en combinaison avec l'une des revendications 3 à 12, caractérisée en ce que :
- le dispositif de réglage (59) est équipé d'une seconde butée de fin de course (91), de préférence réglable, pour le support (66) du dispositif de fixation (58),
- sur les deux butées de fin de course (86 ; 91), au moins la butée de fin de course (91) la plus proche de la zone de fixation de la pièce (34) peut se dégager de la trajectoire du support (66), de préférence perpendiculairement à cette trajectoire.

19. Machine de coupe selon l'une des revendications 1 à 18, caractérisée en ce que :
- de préférence du côté du point de base (21) correspondant à la position de sortie ou de repos du chariot de déplacement (22) est un chariot de mesure (25) ou traîneau de mesure guidé de préférence à l'aide du guide horizontal (101, 102) du chariot de déplacement (22) entre une position de mesure proche de la zone de fixation de la pièce (34) et une position de repos en retrait de celle-ci,
- le chariot de mesure (25) ou le traîneau de mesure est équipé d'une, et de préférence, plusieurs languettes de mesure (126) guidées sur le chariot de mesure (25) ou le traîneau de mesure chaque fois à l'aide d'un guide (127) au moins dans une direction sensiblement horizontale,
- de préférence les guides (127) des languettes de mesure (126) sont montés réglables en hauteur sur le chariot de mesure (25) ou le traîneau de mesure.

20. Machine de coupe selon la revendication 19, caractérisée en ce que :
- le chariot de mesure (25) ou le traîneau de mesure peut se verrouiller au moins dans la position de mesure à l'aide d'un dispositif de verrouillage (122),
- de préférence les languettes de mesure (126) sont munies d'une butée agissant dans la direction de mouvement sur la zone de serrage de la pièce (34) et sont couplées chaque fois à un ressort applicateur (128) qui exerce sur les languettes de mesure (126), une force en direction de cette butée.

21. Machine de coupe selon la revendication 19 ou 20, caractérisée en ce que :
- au moins une partie, et de préférence toutes les languettes de mesure (126), sont équipées d'un générateur de signal qui émet chacun un signal de commande lors du dépassement vers le haut ou vers le bas d'une valeur limite réglable du réglage de la languette de mesure correspondante (126).

22. Machine de coupe selon l'une des revendications 17 ou 21, caractérisée en ce que :
- le chariot de mesure (25) ou le traîneau de mesure porte une tige de réglage (135) dont l'extrémité avant est munie de deux têtes de butée (138, 139),
- les deux têtes de butée (138, 139) sont mobiles à l'aide d'un guide (141) en position de butée dans laquelle la tête de butée correspondante (138, 139) se trouve dans le plan de la pièce (34) et elles peuvent être conduites dans une position de repos dans laquelle la tête de butée correspondante se trouve derrière le plan de serrage (36) de la pièce (34) et derrière la trajectoire de l'outil de coupe (24),
- sur les deux têtes de butée (138 ; 139), l'une (138) est rigide et l'autre (139) est réglable horizontalement et parallèlement au plan de serrage (36) de la pièce (34),
- la tige de réglage (135) est montée de préférence sur le chariot de mesure (25) ou le traîneau de mesure de manière réglable en hauteur.

23. Machine de coupe selon la revendication 22, caractérisé en ce que :
- les deux têtes de butée (138 ; 139) sont montées sur un support commun (141) qui peut tourner autour d'un axe de rotation horizontal à l'extrémité avant de la tige de réglage (135).

24. Machine de coupe selon l'une des revendications 1 à 23, caractérisée en ce que :
- le chariot de déplacement (22) ou le traîneau est couplé à un moyen moteur, de préférence en forme de moteur pneumatique (111 ; 112),
- le chariot de travail (23) ou le traîneau de travail est couplé à un moyen moteur (113) de préférence en forme de moteur pneumatique (114),
- les butées horizontales (161 ; 162) du chariot (22) ou du traîneau et les butées verticales (163 ; 164) du chariot de travail (23) ou du traîneau de travail sont couplées de préférence à un capteur de signaux (183) pour les signaux d'inversion des moyens moteurs (111, 112, 113).

25. Machine de coupe selon l'une des revendications 1 à 24, caractérisée en ce que :
- parmi les butées horizontales (161 ; 162) coopérant avec le chariot (22), l'une des butées horizontales (162) est guidée en coulissement par un guide (188) aligné horizontalement entre une position de travail et une position de repos, et lorsque la butée horizontale (162) est en position de travail, l'outil de coupe (24) est réglé sur une ligne de coupe verticale, déterminée, constituant la ligne de base (134) verticale et en position de repos de la butée horizontale (162), l'outil de coupe (24) se trouve à l'extérieur de la zone de fixation de la pièce (34),
- dans la position de travail et dans la position de repos de la butée horizontale (162) on a chaque fois une limite de course respective (189 ; 190),
- un dispositif de verrouillage (192) est prévu pour verrouiller la butée horizontale (162) dans sa position de fonctionnement.

26. Machine de coupe selon la revendication 25, caractérisée en ce que :
- la butée horizontale (162) est couplée à un élément à ressort (191) qui exerce sur la butée horizontale (162) une force en direction de la limite de course (189) correspondant à la position de travail,
- le dispositif de verrouillage (192) comporte un verrou (193) qui présente une surface de butée (195) pour la butée horizontale (162), qui est aligné au moins perpendiculairement à la trajectoire de la butée horizontale (162),
- le verrou (193) et/ou la butée horizontale (162, 197) comportent une surface en forme de rampe (198 ; 199) à l'aide desquelles pour un mouvement de la butée horizontale (162) en position de travail, on a un passage de la surface d'appui (195) sur le verrou (193) avant la surface antagoniste (196) de la butée horizontale (162 ; 197).

27. Machine de coupe selon la revendication 26, caractérisée en ce que :
- le dispositif de verrouillage (192) est équipé d'un moyen moteur, de préférence sous la forme d'un vérin pneumatique (102) qui déplace le verrou (193) de sa position de verrouillage dans sa position de libération,
- de préférence le verrou (193) est couplé à un organe à ressort (202) qui exerce sur le verrou (193) une force en direction de sa position de verrouillage.

28. Machine de coupe selon l'une des revendications 1 à 27, caractérisée en ce que :
- le bâti est monté basculant de préférence au voisinage de son bord inférieur à l'aide d'un ou plusieurs paliers d'axe horizontal,
- il est prévu un dispositif de basculement qui permet de basculer le bâti de sa position pratiquement verticale à une position plus fortement inclinée jusqu'à la position horizontale et qui permet de nouveau de redresser le bâti,
- le dispositif de basculement est constitué de préférence par un ou plusieurs moyens moteurs qui agissent sur le bâti en un point différent de l'axe de basculement et qui sont de préférence des vérins hydrauliques, des entraînements à vis, des entraînements à chaîne ou des entraînements à câble.
